# EUROPEAN PATENT SPECIFICATION

(11) **EP 1 571 805 B1**
(45) Date of publication and mention of the grant of the patent: **05.11.2008**
(21) Application number: 05250087.3
(22) Date of filing: 10.01.2005
(51) Int. Cl.: H04L 29/08

(54) **Protocol stack with modification facility**
Protokollstapel mit Änderungsmöglichkeit
Pile de protocoles capable de modification

(30) Priority: 27.02.2004 GB 0404407
(43) Date of publication of application: 07.09.2005
(73) Proprietor: KABUSHIKI KAISHA TOSHIBA, Tokyo 105-8001 (JP)
(72) Inventor: Farnham, Timothy David, Bristol BS1 4ND (GB)
(74) Representative: Round, Edward Mark

(56) References cited:
- EP-A- 0 852 448
- EP-A- 0 971 551
- US-A- 5 903 754
- LE T H ET AL: "Performance of an accessing and allocation scheme for the download channel in software radio" WIRELESS COMMUNICATIONS AND NETWORKING CONFERNCE, 2000. WCNC. 2000 IEEE 23-28 SEPTEMBER 2000, PISCATAWAY, NJ, USA,IEEE, vol. 2, 23 September 2000 (2000-09-23), pages 517-521, XP010532302 ISBN: 0-7803-6596-8

## Description

### FIELD OF THE INVENTION

The present invention relates to protocol stacks and protocol layers within protocol stacks especially, but not exclusively, for communications terminals such as mobile phones, lap top computers and base stations.

### BACKGROUND OF THE INVENTION

Communications devices such as mobile phones, lap top computers and base stations increasingly need to support multiple protocol stacks with different configurations to allow support for multiple radio access network standards (potentially simultaneously) potentially supporting different optional features. For example a lap top computer may need to support both secure and insecure Internet access over a wireless local area network, GSM or UMTS, and Bluetooth. The security, provided as part of a VPN feature within the IP protocol stack in addition to encryption at the link layer are provided as different options within the protocol stacks. However, it is important that the unencrypted packets are not forwarded to other insecure (or less secure) stacks. Therefore, protocol stacks supporting these different communication standards need to be provided in a secure framework. Ideally these protocol stacks should be reconfigurable to allow for supporting new communication standards or options and extensions to existing standards by downloading new protocol software modules. In addition, communications devices increasingly need to be able to use the scarce battery and radio frequency resources efficiently.

Therefore there is a need to be able to install communication software to allow new air interface technologies and optional features and extensions to those technologies, including additional functionality such as enhanced security, performance or power consumption optimisation.

Typically, reconfiguration of protocol stacks requires the modularisation of the protocol stack software to be performed in such a way that the interfaces between layers do not change dynamically and are well defined. Protocol stack and network interface driver software frameworks exist on many operating systems to check that the protocol (or driver) modules conform to the correct version of these interface definitions and then utilise execution environment (operating system) specific mechanisms to install the modules into the system. Measures may also be taken to validate the software and enforce restrictions on the functions that can be performed by the protocol software. However, these restrictions do not normally consider the context of the protocol stack arrangement as mentioned previously, which can have different requirements on security (execution environment) protection measures and performance depending on the type of service being supported. Also, these existing approaches do not consider the use of multiple execution environments to implement a protocol stack arrangement.

Normally protocol stacks for mobile communications devices are provided by a single vendor. In the future terminal devices will require more flexible protocol stacks to support different communication technologies and multiple vendors may become involved in protocol stack solutions. This is particularly important in wireless terminals that may need to support several standards with many optional features. Therefore, allowing incremental updating of protocol stacks is very attractive.

Protocol stacks consist of a set of layers each of which can be regarded as a software process performing a series of predetermined steps (corresponding to a protocol) on received packets or messages and associated with a certain protocol implementation. Multiple logical protocol stacks can be instantiated in a given system, for example using multiple threads, to support multiple traffic classes or network interfaces of the same basic type simultaneously. Multiple logical instances of the same protocol stack are traditionally achieved by using a single software (protocol stack configuration) arrangement for all these logical protocol stack instances. However, this limits the flexibility in providing different security, and execution environment optimisations for the different logical instances.

The expected behaviour of the protocol stack is only achieved if all the modules interact successfully with the required timeliness and in accordance with the protocol definitions that are being used. This will also depend on the protocol stack implementations on multiple devices as most protocols rely on interaction between protocol stacks on different devices to set up and maintain communication connections. Flexible protocol stacks that allow dynamic insertion replacement or modification of software layers are always vulnerable to rogue software (which can be malicious or just badly behaved) that can affect the overall operation or security of the protocol stack by either not obeying the protocol definition, sending packets to the wrong recipient, corrupting packets, forming incorrect or invalid packets or intercepting and forwarding packets to purposely eavesdrop or gain access to secure connections, or simply stalling (hanging).

WO 02/28052 discloses a wireless network interface having adaptable protocols that use parameters to define programmable protocol stack behaviour. This allows a limited amount of reconfiguration to take place by using different parameters. However it does not allow dynamic insertion of new protocol software modules or layers. Adaptable protocols that use parameters to define programmable protocol stack behaviour have more predictable behaviour because there is only a limited amount of reconfiguration that can take place. They also do not provide as much flexibility as protocol stacks that allow dynamic insertion of new protocol software modules.

US 5751972 discloses dynamically configuring a computer during run-time to establish a data transfer path using different protocols over a network. The composition of protocol stacks is achieved by using operating system specific linking mechanisms. This has limited flexibility in that each protocol stack module must conform to a specific operating system dependent interface definition. Also, only a limited range of protocol modules are available to ensure the interaction between layers is well defined so that the stack will operate successfully.

US 5903754 discloses a dynamic layered protocol stack comprising a set of protocol layers implemented as objects in an object oriented programming environment. Each object is bound to an associated protocol interface. When connecting object layers in a stack, an established object must support the interface need by the new object. Failure to support an appropriate interface results in stack building failure.

WO 01/88707 discloses a flexible protocol stack architecture which employs active programming interface layers between each of the layers of the protocol stack which provides a flexible link between the protocol layer above and below such that this can be changed at run-time. However these additional intermediate layers add to the complexity of the stack and can seriously degrade its performance if mixed execution environment implementation is required. Also, the linking of software modules is performed in an execution environment and programming language specific manner (Java Virtual Machine) and is optimised for exploiting the dynamic class-loading concept in Java to allow dynamic reconfiguration of protocol stacks.

A layer in a protocol stack will conventionally be designed to exist in one of a number of predetermined states. A layer in a particular state will be configured to be operable to receive and respond to certain messages or signals, a message either transforming the layer into another of the predetermined states, or to leave the state of the layer unchanged.

The conditional transitions of a layer, between these predetermined states, depends on the receipt of messages by the layer. The effectiveness of the layer to behave flexibly is enhanced by allowing messages to be handled regardless of computer programming language utilised, i.e. promoting language independence, and also to allow the execution of state functionality in different execution environments.

To enable effective and consistent design of layers, and implementation through the design of suitable software, a designer may firstly determine the states of the layer, and the transitions between the states that describe the desired behaviour of the layer in response to received messages. Thus, each state of a layer can be implemented by a corresponding functional module in the most appropriate language and can be executed in the most appropriate execution environment.

In this case a state module defines a self-contained functionality of one particular state of the layer it can instance, capturing messages that apply directly to it, while disregarding messages that do not, for processing by another module handling the behaviour of the layer when it is in another state.

During the lifetime of the device in which the protocol stack is defined, it may be necessary to change the functionality of one or more modules in one or more layers of the stack. This might be required, for instance, if the functionality of the protocol stack needs to be extended, such as to accommodate a new communications technology, or if minor improvements are required to one or more layers of the protocol stack. It would be possible to replace an entire layer by making use of a layer loading function. A typical facility to enable the loading of a new layer into a protocol stack will now be described with reference to accompanying drawings. This was previously described in earlier filed patent application GB0322985.3, a copy of which is furnished with this application and which is hereby incorporated by reference.

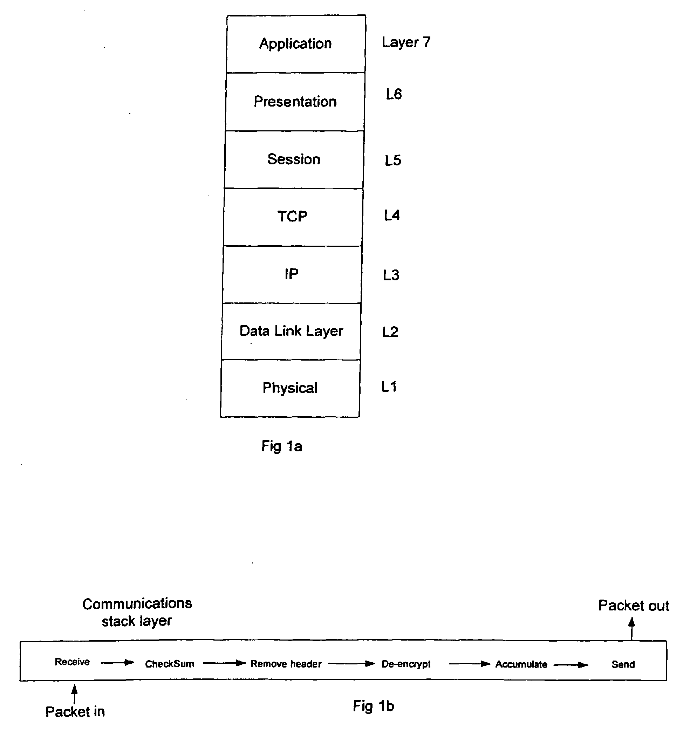

Figure 1a illustrates a communications protocol stack, which will be familiar to those skilled in the art. The protocol stack comprises a number of software or protocol layers L1 - L7 through which signals or protocol messages are processed. For example the application (L7) may be a web browser or a controller for a GSM voice call, the signals and messages generated by the application (L7) being processed down through the lower layers L1-L6 in order to communicate with another application across some physical link such as radio waves, copper wire or optical cable for example.

Figure 1b shows a simplified example of one of the communications stack layers. The actual details of how each layer works will depend on the particular protocol used. The layer receives a packet such as part of a voice call or web page. The layer is a software process performing a series of predetermined steps (protocol) on received packets. The first step performs a check sum calculation and rejects the packet if necessary, then removes the packet header, and another step de-encrypts its data payload. In further steps the layer can then accumulate the data content of a number of received packets before passing a modified and larger packet out to a higher layer. This accumulation can be (and is often) performed in a shared buffer (or queues) to avoid unnecessary memory copying. Typically communications layers will also process packets in the opposite direction from higher to lower levels of layers. In principle two adjacent layers need not "know" what the other layer is doing or how it does it; but in practice the interface between the layers needs to be defined in terms of the exact format of data (packet) content and the buffer storage arrangements passed and how this is achieved, for example knowing which layer to pass this data to and how to start this layer processing the passed data. This limits the flexibility of the stack as described above with respect to known arrangements.

Typically conventional non-reconfigurable communications protocol stacks in mobile phones and the like are set at the time of manufacture, the software code required to instantiate the various software layers in working memory being fixed and stored, possibly as firmware within the phone. This means that if one of the layers needs upgrading, the protocol stack needs to be shut down and the entire code, or at least the upgraded layer code rewritten to the communications device, and then the terminal rebooted and the upgraded protocol stack re-instantiated. This requires any active calls on the communications device to be terminated and the device to be taken off-line for calls. Another problem with this approach is that the different layers are typically interfaced with each other in a very specific manner to make the protocol stack work as noted in some of the above references. This means that the provider of the new or upgraded software needs to know in advance exactly how to interact with the layer above and below for the particular implementation and platform. Again this limits the flexibility of the stack.

Other proposed approaches to support reconfiguration of protocol stacks at run-time allow the downloading of protocol software and dynamic insertion of the protocol software into existing protocol stacks by temporarily suspending stack execution and linking the new software into the existing stack using execution environment and programming language specific mechanisms. This again requires temporary suspension of active communication sessions, as well as the provider of the new software knowing what other stack software to interface with, the shared packet buffer arrangements particular to the layers in question, and how to do this in terms of providing language and operating system specific command and data formats. These approaches also take the risk that if the software is badly behaved it could disrupt many of the active communication sessions until the problem is detected and the rogue software removed. Also, the interface between the layers that permits the insertion of new modules cannot be easily upgraded or individually configured to restrict the interactions between different logical instances of protocol software because the logical instances are not visible to the generic interface layer.

Additionally there is likely to be a future need for layers to be written in a different software language from other layers. For example layers close to the physical layer require rapid processing and so may be precompiled into highly optimised hardware specific machine language for rapid execution whereas layers higher up the stack may be platform independent and therefore operate on a virtual machine environment or an interpreter and so are much slower but more flexible in order to allow platform independence and therefore encourage third parties to develop new applications. However, two layers using different languages cannot exploit known common language in terms of language specific data structures, naming conventions (name handling conventions) and function calling (parameter passing) conventions.

Another problem with current approaches is that they limit the ability to upgrade the stack as each of the layers are tightly constrained by the interface definition (including shared buffer arrangements) supporting the interaction between the layers above and below them which is often language and operating system (execution environment) specific. This situation is exacerbated in the likely event that in future different layers of the protocol stack will be provided by different vendors who will then have to provide an interface which uses the same language (and even in some circumstances the same compiler) and interfacing function and shared buffer formats for the layers that they need to interface with.

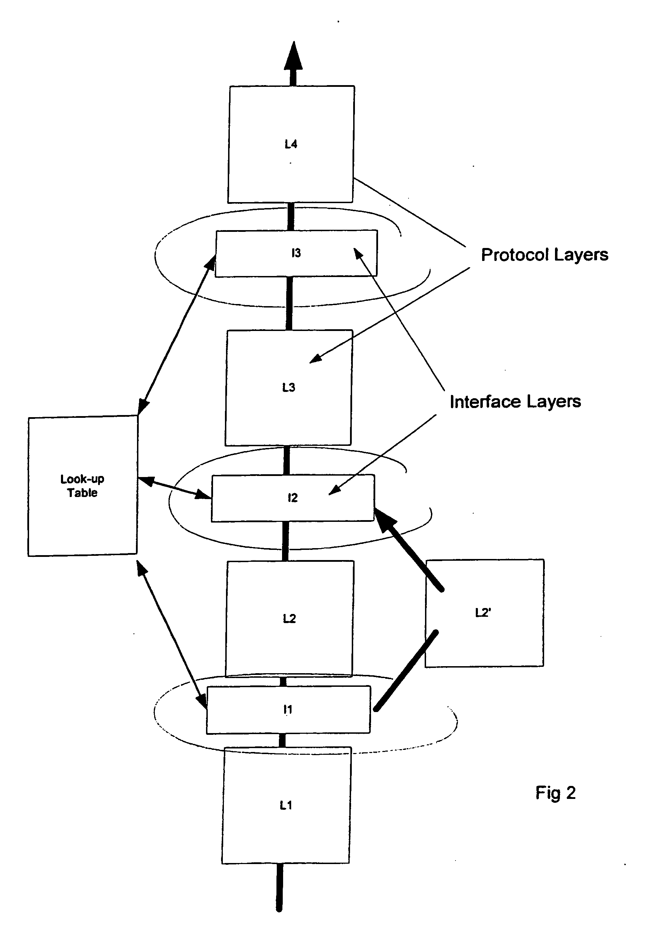

One known approach to providing a dynamically flexible Java protocol stack is illustrated in Figure 2, and utilises interface layers between each protocol stack layer (L1 - L4). This corresponds to the disclosure in WO 01/88707. Between two protocol stack layers is instantiated an interface or intermediate layer with an interface format "known" by the layer above and below it. The interface layer looks up a table to determine which higher protocol layer it should interface with, and then uses a known (Java) interface. Thus in the example shown, an upgraded protocol layer L2' is instantiated and interface layer I₁ determines from the look-up table that it should now direct packets coming from layer L1 to layer L2' rather than layer L2. Layer L2' then directs packets to interface layer I₂ which redirects these to protocol stack layer L3. Thus with the use of these interface layers (I₁-I₃) between each protocol stack layer (L1-L4) and a look-up table, the protocol stack can be dynamically reconfigured. However there is still a requirement for the link between interface and protocol layer to be well defined (the layers are all in a JVM or and use features of the Java language such as class loading, inheritance, class creation and destruction and method identification and calling conventions), and conversion (wrapper functions) performed if necessary to provide the right interface. Also, as the interface layer synchronously supports interactions between adjacent layers, it does not support a shared buffer arrangement for storing packets, which can lead to excessive packet data copying and memory requirements when passing messages between different layers. Additionally, whilst this approach is adequate for single language protocol stacks, it would become cumbersome where layers of different languages are used as the various function calls and formatted data must be converted between language specific formats and naming conventions which is processor and memory intensive.

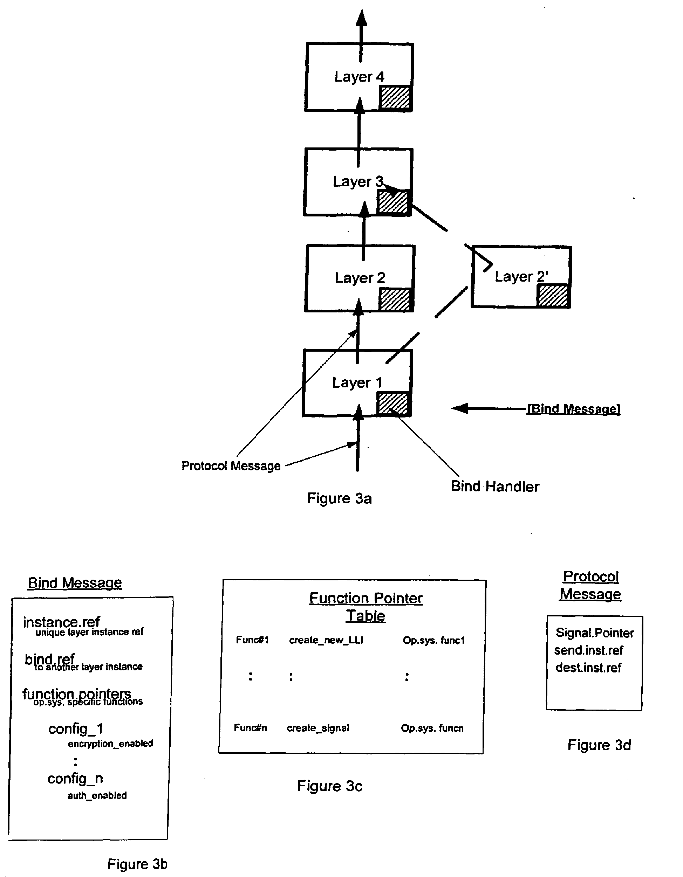

Figure 3a illustrates a protocol stack according to an embodiment. The stack comprises a number of protocol layers (L1-L4), which pass protocol messages (Figure 3d) such as signal packets between them. Whilst these are shown proceeding from lower to higher layers; it will be understood that the same principles apply equally for signals progressing downward through a stack. Each layer receives a bind message (figure 3b) and comprises a bind handler, which determines from the bind message which other layer to direct output.

The next layer, to which output is directed, is indicated by a unique identifier (bind ref.). The preferred method of passing messages between layers uses persistent message queues, but the specific detail of the way in which this is performed and how execution is passed from one layer to another is abstracted away from the protocol layer software as described in more detail below.

Referring to figure 3b, the bind message includes a unique LLI name or identifier (instance.ref) such as L2 for example. Where multiple logical layer instances (LLI) for the same layer are used in parallel (for example in another stack instance processing a different call), the LLI name uniquely identifies that layer instance compared with other instances of the same layer; for example L2₁ and L2₂. Multiple instantiation of layers is described in more detail below.

The bind message can also comprise a table of language specific functions, which represents the operating system Application Programmer Interface (API) that can be dynamically encapsulated into a Java or C++ "protocol stack operating system" class or contained in a C structure and a set of wrapper functions used to access them within the layer software. The table of functions comprises a predetermined set of basic operating system functions such as new LLI instance creation *(create_new*_*LLI*) and LLI messaging *(send_message. receive_message).* The table provided will depend on the execution environment to which the layer (or even one of the multiple LLI of the layer) will be run. In other words the functions themselves are operating system or Virtual machine (e.g. JVM) environment specific, however, because they are passed to the layer (instance) at bind time, this means the layer (instance) itself is operating system and execution environment independent and uses the function table to interact with other layers in its stack in the appropriate way.

In an alternative arrangement, the bind message contains pointers (function.pointer) to the required operating system specific functions, which can be stored in a table in shared memory for example.

In the illustration of Figure 3c, predetermined generic functions (Func#1 - Func#n) used by the layers are mapped to operating system specific functions (op.sys.funcl. - op.sys.funcn). Some typical example functions are shown e.g. *create_new_LLI,* which the operating system carries out on behalf of the layer

Thus, each layer will comprise generic function calls (Func#1-Func#n) which allow it to inter-operate with other layers but without knowing which operating system environment it will be executed in as the operating system specific functions are passed to it at bind time. This can also abstract away from the software layers implemented as code modules the specific type of inter-process communication (messaging) and security mechanisms used to support the interactions between LLI The only requirement is that a vendor of a layer must use the appropriate predetermined generic function calls - for example Func#1 to start a new LLI, Func#2 to send a message to another LLI, Func#3 to receive a message from another LLI and so on. Similarly, as two LLI will be passed the same specific operating system functions, then they will be able to interface with each other by using the same message passing functions.

To take this further, the two LLI can be passed different operating system specific functions and thereby operate in different execution environments using a virtual operating system function table as described in more detail below. In this way, the layers are operating system and language independent. The necessary operating system specific functions required to inter-operate with the rest of the stack are passed to them at bind/rebind time.

Different instances of the same layer can execute in different environments by being passed different function tables having different operating system specific functions in their bind messages. Thus a single piece of code (module) can interact with other bits of code (modules) differently (for example function calling in one and asynchronous message passing in the other), purely by having a different type of operating system specific function mapped to the generic send_message and receive_message functions in each LLI. This is because the table used to map the generic send_message function to a corresponding operating system specific function is performed on a per LLI basis. However, in order for an LLI to communicate successfully with another LLI then both LLIs need to use the same mapping from the generic send_message and receive_message functions to the operating system functions otherwise the receiving LLI would never receive anything when the LLI performed a send_message.

The bind message can also contain layer instance configuration information (config_1 to config_n) to configure the instance of the layer appropriately to that logical instance of the layer, for example enabling or disabling different optional protocol features.

By using this generic and non-layer specific binding mechanism, each logical layer instance can dynamically (at run-time) be directed to a new logical layer instance to interact with by sending another bind message to that instance. It can be seen that this may include the dynamic insertion of a new layer and additionally allows for language independent interaction between layers.

Referring to Figure 3d, protocol messages are passed between the layers to communicate signal or packet information up and down the protocol stack. Each protocol message will be directed from a sending layer (e.g. layer 1) to a destination layer (e.g. layer 2) according to the bind.ref identifier associated with the sending layer and provided to that sending layer in its bind message (see Figure 3b). The protocol message will also comprise signal data or a signal pointer pointing to the signal data in shared memory. Again the signal data (or pointer) and the identifiers (send.inst.ref and dest.inst.ref) are in a common generic share data format.

The protocol and bind messages are signals passed between protocol stack entities (the various LLIs), and this signal passing can be performed using different mechanisms such as function call or thread messaging mechanisms. Normally thread messaging is between different operating system threads and a message is placed on a queue and then the operating system wakes (schedules) the receiving thread to read the message from the queue.

The generic functions (such as send_message and receive_message) are used to allow message passing in whichever method is appropriate to the target platform for that particular interaction. The code itself does not need to know what method is used. However, to call the send_message function requires that the message that is being sent is in a generic format and is passed to the send_message function in a predetermined manner. The messages can be dynamically created and identified by using a generic create_message function (also supplied within the table of operating system specific functions), which generates a handle (or reference) for the message that can be used within the send_message function. The preferred method of passing a message to the send_message function is to pass it by reference (a pointer to the message is passed in the function call). This minimises the amount of copying of data that has to occur as otherwise the message data would be copied from heap (or shared) memory into stack memory and then back out to heap or shared memory. The preferred approach is efficient and does not involve excessive copying of message data. In fact if the message data is always held in heap or shared memory then no copying at all is required.

Thus the layer software (module) does not require any knowledge of what language or even calling conventions that are used within the software layer (module) that it is sending a message to as it only needs to know the calling convention of the send_message and create_message functions that are available to it. And likewise the receiving software layer (module) just needs to know about the receive_message function. The actual message content then has to be accessed and a common generic shared data storage method is used together with language specific access functions to access this data. In the same manner bind messages or protocol messages (packets) can be accessed in a generic way by each layer regardless of programming language and execution environment.

The functions used to access the data can be passed to the software layers (code modules) as part of the operating system specific functions within the bind message. To enable message (or signal), configuration and shared data to be accessed efficiently by different programming languages and also to allow for upgrading, the format must be extensible. For example an extensible mark-up language (XML) or other (such as Abstract Syntax Notation ASN.1) template definition can be used to define the data format and also to access shared data storage structures at run-time by using unique identifiers to identify data elements and their corresponding data types. The language specific data access functions can then retrieve the elements required efficiently. This permits the use of the same data by different versions of protocol software. Older version will not require access to new data members and will not attempt to access them. The removal of the knowledge of obsolete data members is also possible in newer software versions but the data template definition will still have a placeholder for obsolete data members to support older software module versions. Identifiers that uniquely identify data members (including all obsolete data members) are used within the software modules to access these data members. However, because of the indirection provided by the language specific data access functions the actual data can all be stored in a common shared memory region and appropriate security measures (such as data type or element level authorisation using read and write locking mechanisms) to prevent unauthorised access to data by individual LLI.

These functions can be encapsulated within more complex Interface Definition Language (IDL) schemes to allow exploitation of the features of existing or new component technologies. Language specific IDL definitions could also allow exploitation of complex data types that cannot be easily mapped between different languages (for example a set of Java classes and component interface for Java layers and a set of C++ interface classes for C++ layers etc.). The mapping of specific IDL to and from the XML or ASN.1 template would need to be handled by this additional component interface software. To improve the access speed to large quantities of shared data using the common storage structure, the identifiers can be hierarchically arranged in linked lists or sequentially within a data array to minimise the look-up time required to locate the desired elements.

An example of a programming language independent data template definition is an extensible mark-up language (XML) schema or Abstract Syntax Notation (ASN) tag or data sequence definitions respectively. The data element (or attribute) access functions can utilise indirection (memory pointers) to access the actual items within data element sequences to improve the access performance as shown in the table below. In this manner, the resolving of the data element becomes a look-up operation and a casting or conversion of the result to the required data format as defined in the template.

| Identifier | Type | Memory Pointer |
|---|---|---|
| 1 | INTEGER | XXXXXXXX |
| 2 | STRING | YYYYYYYY |
| - | | - |

```
 Where the example ASN-1 definition is:
 Message ::= SEQUENCE (

      Message_Number INTEGER OPTIONAL,
      Message_Name STRING
 }
```

The generic functions used to access the message data could also be contained within the generic operating system table of functions passed with the bind message to allow the actual implementation of the data access functions to be optimised for the platform. For example for the data element with the unique identifier "1243", the software layer calls the generic layer function get_attribute ("1243"). The layer software needs to know the data type of the elements defined in the XML or ASN.1 template format. The template corresponding to configuration data and messages used by layer software needs to be known by the generic get_attribute and set_attribute functions in order to allow type conversion as appropriate. Therefore, the get_attribute and set_attribute functions take as a parameter a handle (reference) to the template definition. The handle (or reference) is generated by the generic load_template function. The generic functions get_attribute and set_attribute would also take a configuration data or message handle (or reference) and hold a look-up table in order to be able to store the memory pointer reference for a particular data element and record its unique identifier reference.

Another option is to have two attribute identifiers pointing to the same actual data element. This may be attractive to avoid data duplication when the different identifiers are in fact corresponding to the same data element but with different conversion types. For example if the data element identifier "1243" corresponds to a data element that is specified within the template as being the "message name" and is a null terminated Unicode string. The attribute identifier "1244" could be corresponding also to the same "message name" but a different format, for example 255 byte ASCII character string. The conversion of types can be hidden from the software layers by the get_attribute function. Therefore, if a Java software module calls get_attribute it would be using identifier "1243" and get a Unicode string and if a C++ module wanted to access the data element it could call get_attribute on the "1244" element and get a 255byte ASCII string.

In the preferred embodiment, the same template is used for all message data regardless of the LLI sending and receiving the messages. This provides a so-called Generic Service Access Point (GSAP) to a LLI that is independent of the protocol functionality within the LLI. A possible example generic template definition for a GSAP is shown below.

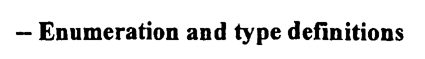

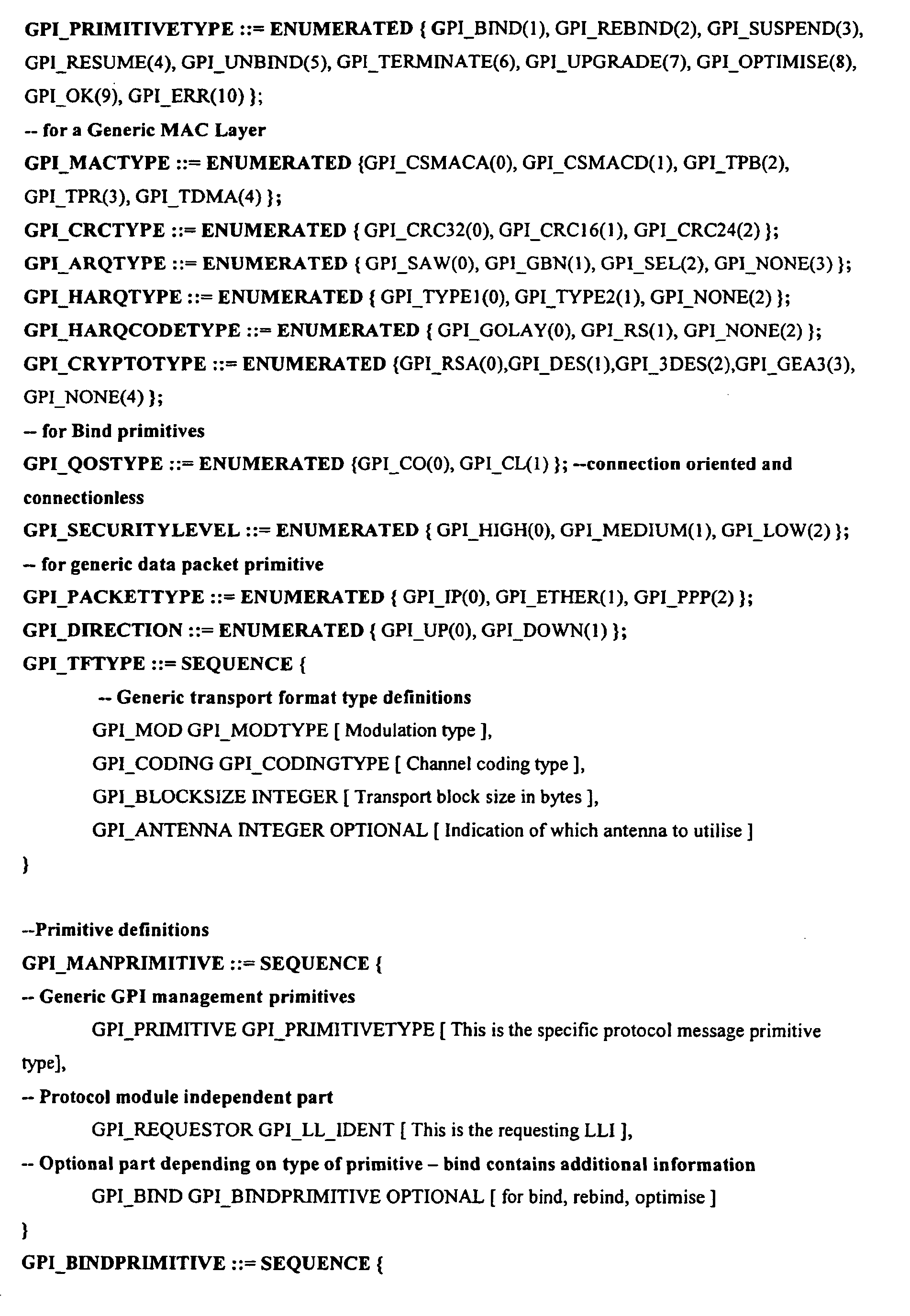

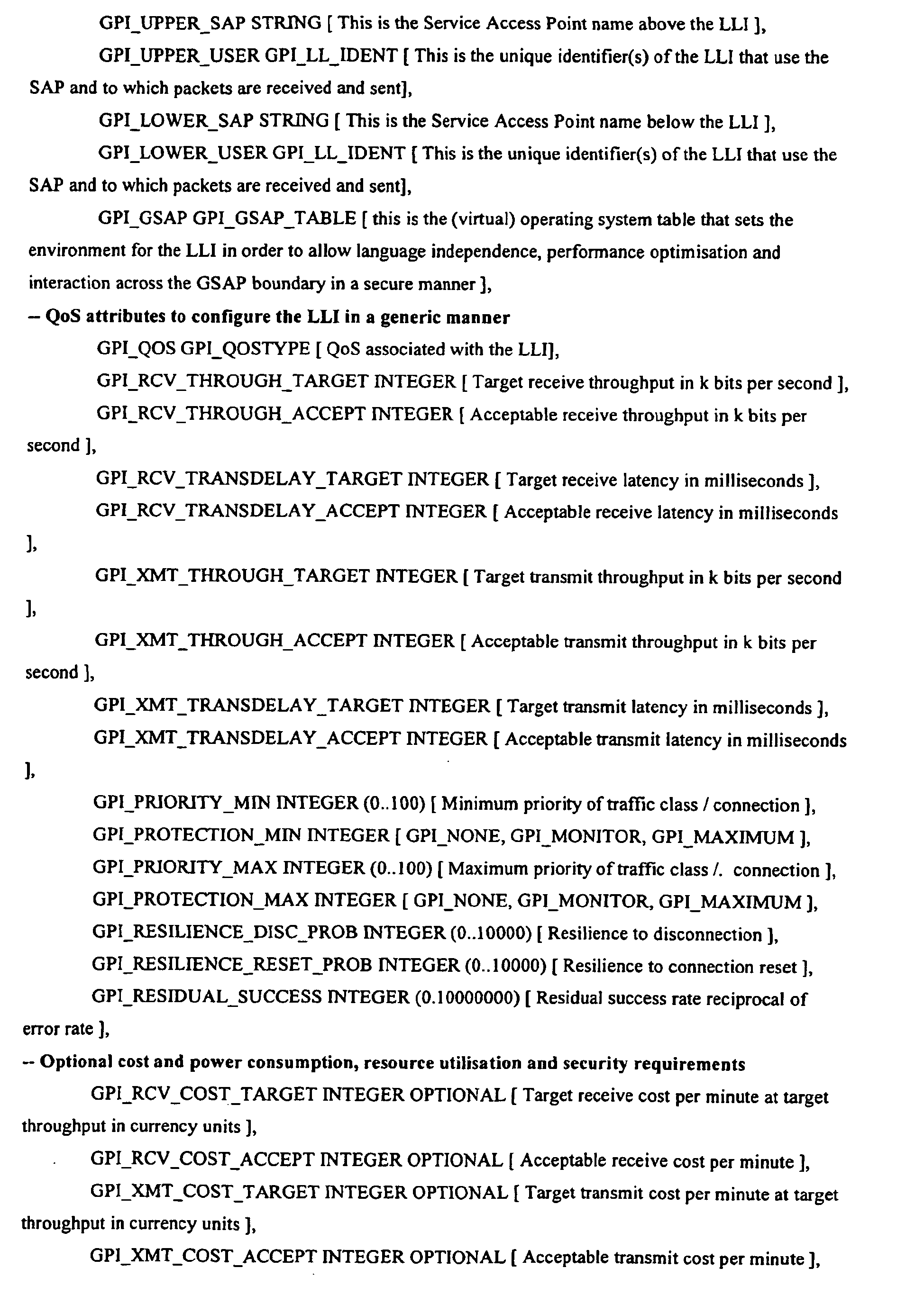

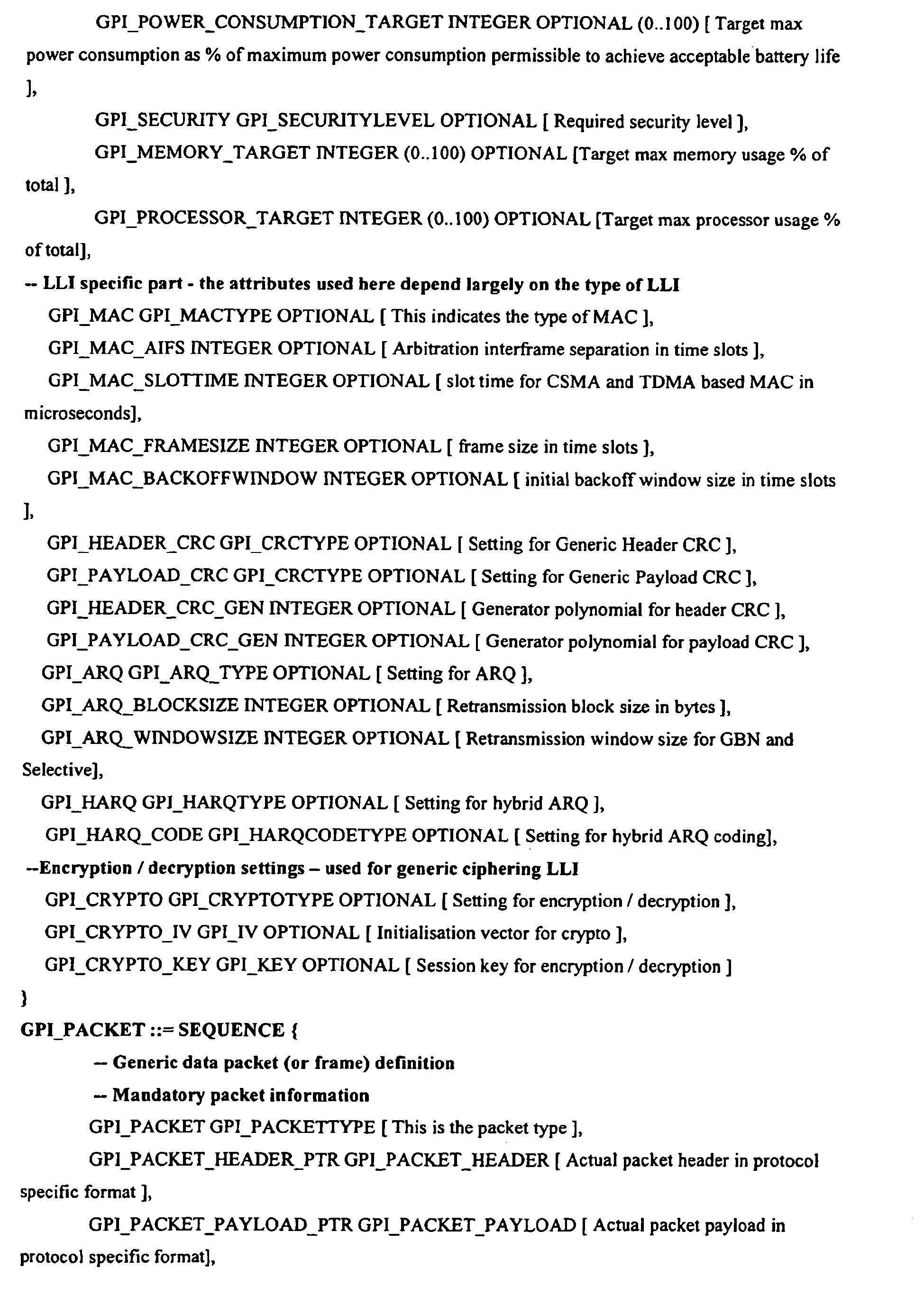

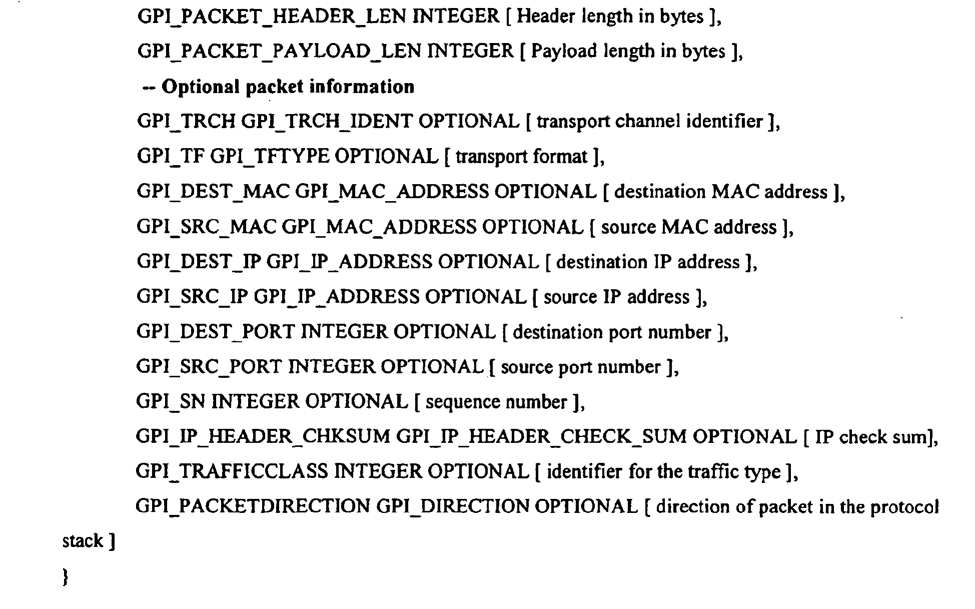

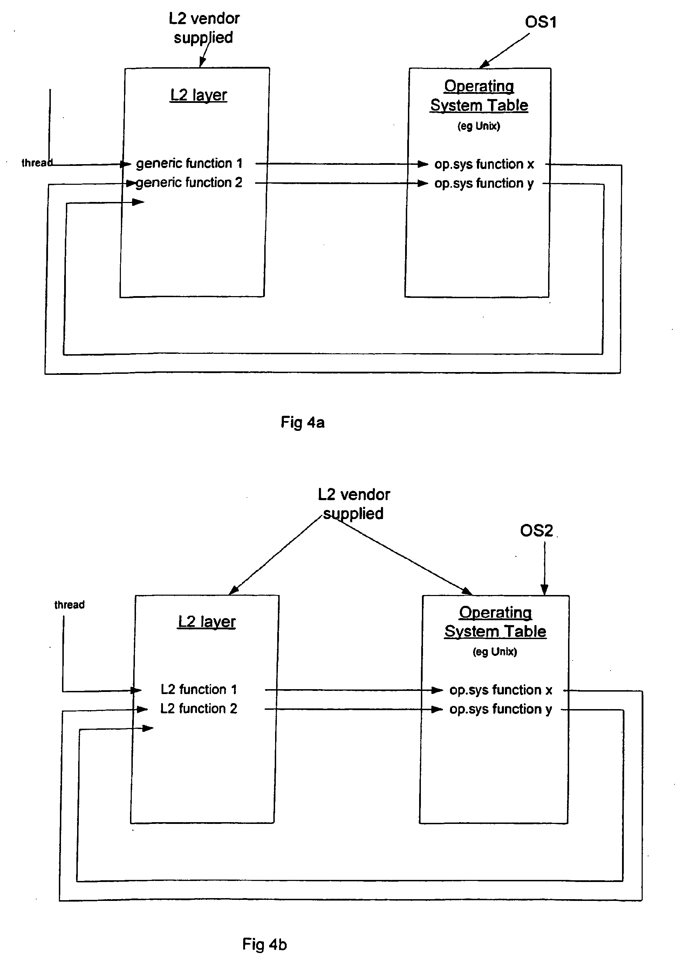

The mapping between generic functions in the layers and the operating system specific functions called by the LLI in their execution environment, can be carried out in a number ways. Referring to Figure 4a, each software layer (e.g. L2), comprises a number of predetermined generic functions. Assuming the vendor of the L2 layer uses the predetermined generic functions, this layer will interoperate with other layers within the protocol stack. The execution environment supporting the layers of the protocol stack is associated with an operating system table (OS1) or other object, which effectively maps the generic functions associated with the layers to operating system specific functions that will carry out the generic functions in that particular execution environment. In the example shown, generic function 1 in L2, for example receive_message, is converted to the equivalent function for the UNIX POSIX based execution environment. The operating system table (OS) or mapping object may be supplied by the operator of the protocol stack for example, or some other entity such as the execution environment provider.

Figure 4b shows an alternative arrangement, in which the software layer L2 comprises functions specific to that layer which can then mapped by an operating system table (OS2) or other mapping object directly from their L2 format to the local operating system format. Thus for example L2 function 1 (which again corresponds to send_message) is mapped by the operating system table OS2 into the local UNIX POSIX based execution environment function or functions for the receive_message function. In this particular arrangement, it is likely that the vendor of the L2 software layer will also supply the corresponding operating system table OS2 or mapping object for a UNIX operating system environment. The L2 vendor may be able to supply a number of operating system tables for different types of operating systems in order to interpret the vendor supplied L2 software layer.

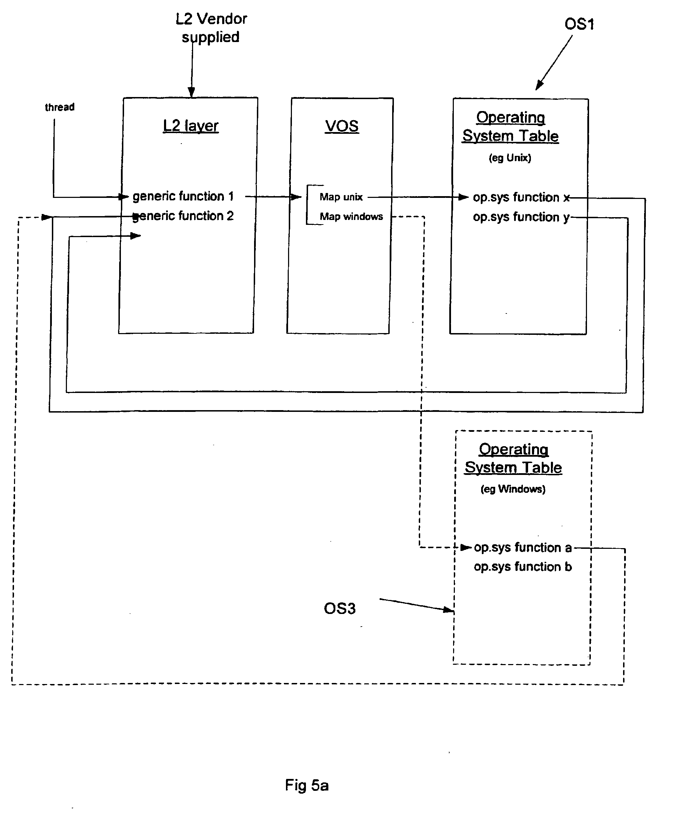

Figure 5a shows schematically the use of a virtual operating system (VOS) which can be used to point a generic function call to the appropriate operating system - UNIX (OS1) or Microsoft Windows(RTM) (OS2) in the example shown. Thus for example where more than one operating system or execution environment option is used to drive normal protocol layers on a device or apparatus such as a base station or terminal for example, the VOS can direct a generic function call from the software layer L2 for example to either the UNIX or Microsoft Windows(RTM) operating system table (OS 1 or OS2 respectively) or mapping object. In the case where two instances of the same software layer are executed in different operating environments, the VOS can map the same generic function (e.g. generic function 1) to say the UNIX operating system table (OS1) for the first LLI, and the Microsoft Windows(RTM) operating system table (OS3) for the second LLI, where the same generic function corresponds respectively to op.sys function x and op.sys.function a. Because the software layer L2 is using generic functions, the vendor of L2 need only supply the actual layer software (module), and needn't be involved with the VOS or operating system table software. The operation of the VOS is described in more detail further below.

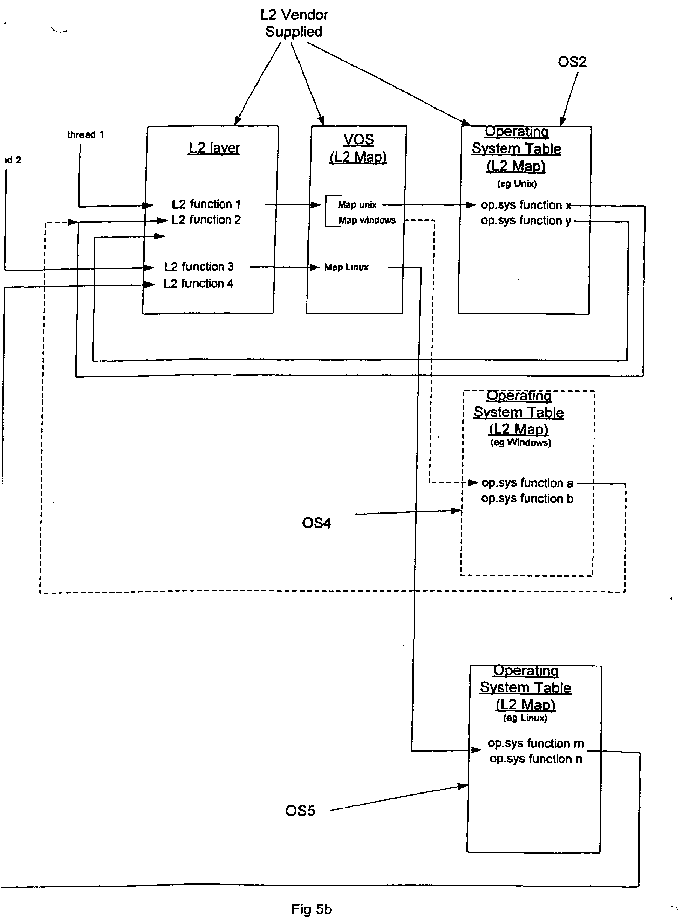

Referring now to Figure 5b, the vendor supplied L2 software layer comprises layer specific functions which are then mapped by a virtual operating system (VOS) that could also be supplied by the L2 vendor which can map the L2 specific functions between different operating systems, again using operating system specific tables (OS2, OS4, OS5) or mapping objects which could also be supplied by the L2 vendor in order to map the L2 specific functions to the respective operating system functions, for example UNIX and Microsoft Windows(RTM) respectively. Thus various embodiments can be implemented to achieve the language and/or operating system independence of the protocol layer software.

Figure 5b also illustrates how two threads, for example each corresponding to different LLI, can be mapped to different operating system tables for execution in different execution environments. Thread1 is pointed to a specific entry in the VOS table or map by an L2 specific function (L2 function 1), and in turn is pointed to a specific entry in the UNIX operating system table OS2 that corresponds to a function (op.sys.function.x) that can be executed in the UNIX environment. Thread1 then returns to the next function pointer (L2 function 2) in the layer L2 module. In a different embodiment, thread1 might be pointed to a Window's operating system table OS4 by the VOS, for execution of a Windows specific function (op.sys.function.a) corresponding to the L2 specific function pointer (L2 function 1) in the layer L2 module, in a Window's environment.

Thread2 may correspond to a different LLI of the same layer L2 executed in a different Linux execution environment. In this scenario an L2 specific function pointer (e.g. L2 function 3) is mapped to a Linux specific function (op.sys.function.m), which is executed and thread2 then returns to its next function pointer (L2 function 4) in the layer L2 module.

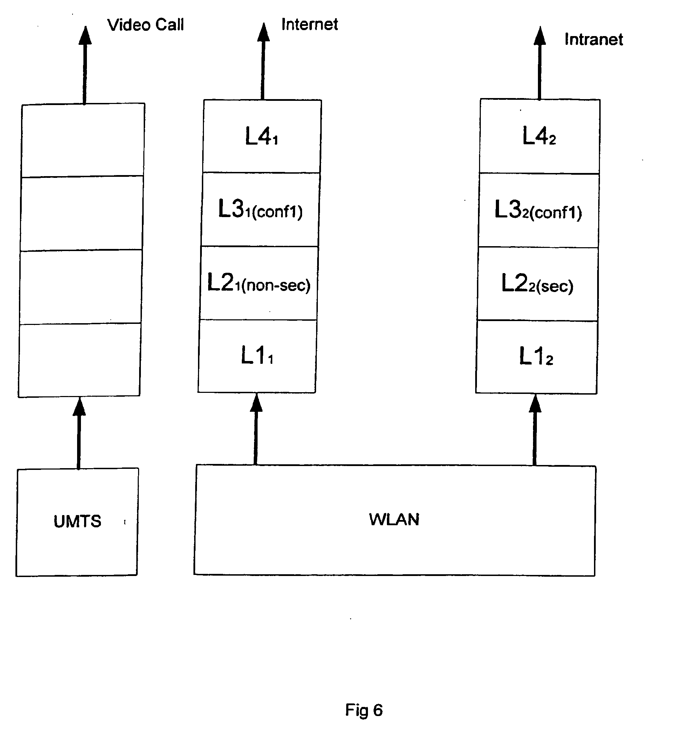

Figure 6 shows multiple instantiations of layers in multiple protocol stacks. A UMTS video call and two WLAN Internet browsing protocol stacks are shown active simultaneously. One of the Internet stacks supports unrestricted Internet browsing, whilst the other supports browsing an intranet and as such must support encryption (for example based on a Virtual Private Networking VPN protocol). The two browser stacks each have four protocol layer instances (L4₁-L1₁, and L4₂-L1₂ respectively) coupled to the WLAN, however the layer 2 instances (L2₁ and L2₂) are configured differently in each. This is illustrated by L2₂ (sec) in the Internet stack which indicates a second instance of layer 2 which supports encryption, and L2₁ (non-sec) in the Internet stack which indicates a first instance of layer 2 which does not support encryption. These configurations will have been determined by the original bind message sent to each instance of this layer (L2₁ and L2₂). Layers 1, 3 and 4 are the same for the two browser stacks, and contains separate (L1₁, L3₁, L4₁, and L1₂, L3₂, L4₂ respectively), but identically configured instances of the respective layers.

The execution environments used to execute the secure stack layer instances may be configured to prevent any possibility of access to message or configuration data from the insecure instance. For example, this can be achieved by using an operating system function table that performs authorisation of all memory access and messaging operation to isolate them from secure stack instances. The underlying implementation of the send_message function for example is determined by what the VOS and/or operating system mapping object supplier wants the function to do. Therefore, if for example the software layer is un-trusted then the functions performed in the send_message and receive_message functions will be much more security conscious. This may include for example authorisation functions coupled to the basic retrieve data function. In a further example the create_LLI function creates a separate process with its own memory region to ensure that there is no possibility that the layer can access memory used by a trusted software module. It could even be executed in a separate operating system environment if it was deemed that the operating system itself was not trusted enough.

Each layer may also be implemented with different performance optimisation, for example with priority given to the stack instance performing the processing intensive encryption operations.

The second LLI for (L2₂) of layer 2 uses the same code module (Layer 2) as the first LLI (L2₁), but is a new logical entity (in this case an operating system thread of execution or process) rather than a further copy of the code module loaded into working memory. For example the second LLI (L2₂) may be a second thread of execution within this code module, which is controlled by the operating system and has its own unique identifier and configuration associated with it. This configuration information is only accessible to that LLI (e.g. thread) of the logical layer and to a controlling entity (CM which is described in more detail below), which sets up the configuration for each instance. The interaction between LLI is also configured by the CM and can prevent LLI that are not required to interact from interacting (via execution environment configuration measures).

Furthermore, although the two LLI (L2₁ and L2₂) of layer 2 support common functionality, they can be configured differently. In this example L2₂ supports encryption/decryption and L2₁ does not. These configuration settings are set by the bind message, and can be stored in appropriate locations in the stack or a table in working memory associated with each instance (LLI).

A second LLI of the layer 2 software will have a different LLI identifier [instance. ref], as well as a different bind reference [bind. ref] linking it to a different output layer. The operating system function table (or operating system class) identified by [function. ref] can be the same operating system table as used by the first LLI of layer 2, unless it is operating in a different execution environment in which case it will require a different operating system function table to map the generic functions to the operating system specific functions needed to carry out these functions within its respective execution environment. The second LLI could also have its own execution stack (L2₂ stack) and heap memory. Each LLI will have the same configuration options available but can enable/disable these differently. These can be stored as parameters in their respective LLI configurations.

Each layer will utilise the predetermined generic function calls, which will include thread management as well as memory management functions. These are then mapped at run-time onto the set of operating system specific functions on the target device. Data accessed by more than one LLI (such as the operating system function table and the signal packets) is provided in a predetermined format, which enables each LLI to access this information using the set of predetermined function calls.

A bind signal [bind. para] can be received by a LLI at any time, including after the original bind signal, and thus allows the configuration options of the LLI to be changed, and in addition allows the LLI to be bound to another LLI by changing the bind. ref parameter, thus allowing dynamic rebinding of the protocol stack.

A LLI of a protocol layer can be generated by instantiating an operating system thread that has its own execution stack to provide a degree of control and isolation from other threads of execution (for example being able to terminate and provide priority based multi-tasking between different threads). Alternatively, different LLI can be instantiated as different operating system process, to provide a greater degree of isolation and control by giving each process its own memory heap and preventing access from other LLI. However, this incurs the penalty of increased overhead in performing priority-based multi-tasking (i.e. context switching between processes as apposed to threads). Finally, the LLI can be instantiated within the same operating system thread. This has the benefit that there are minimal overheads in setting up and controlling the LLI, but there is no separate stack or heap and therefore the access to data (such as LLI configuration) and control over its execution (i.e. prioritisation etc.) could depend heavily on the parent thread if the operating system security measures are being relied upon. In this latter case it is preferred if the programming language and execution environment used by the LLI is the same as its parent thread, but this is not mandatory.

Further to the above operating system execution environments it is also possible to instance an LLI in an external programmable device such as an FPGA or DSP. These execution environments are much different to the environments within a single (or multiple) processor arrangement under the control of the same operating system. However, the virtual operating system function table (VOS) can allow the inter-device communication complexity to be abstracted away from the software modules implementing the LLI on the different devices.

In the above manner multiple logical layer instances can be created in different execution environments using different threads of execution or processes. Further to this each LLI can be configured with different protocol features (configuration options) but can access signal message data and other shared data using common data access mechanisms. A special case occurs when more than one LLI are created within the same thread as mentioned above.

As already discussed, it is possible to execute different LLI of (the same or different) protocol stack layers in different execution environments to provide different levels of security and also performance. For example, a Bluetooth stack may be supporting both a secure, high-speed connection, and an insecure low-speed connection. The execution environments for the LLI handling the secure, high-speed connection can be optimised for security and performance and the LLI supporting the low speed connection could be supported in a less secure and less optimised execution environment.

This approach limits the interaction between LLI and isolates them appropriately using different execution environments if necessary (with the appropriate security measures) for each LLI. In this way highly trusted software can be allowed more freedom and can execute in more optimised execution environments without rigorous run-time security checks being performed or restrictions on functionality, whereas LLI using less trusted software is executed in more secure environments with more restrictions on the permissible interaction with other LLI. These measures will also depend not only on the trust level within the software but on the integrity and other security requirements (such as privacy and confidentiality) associated with the type of service being supported by the LLI.

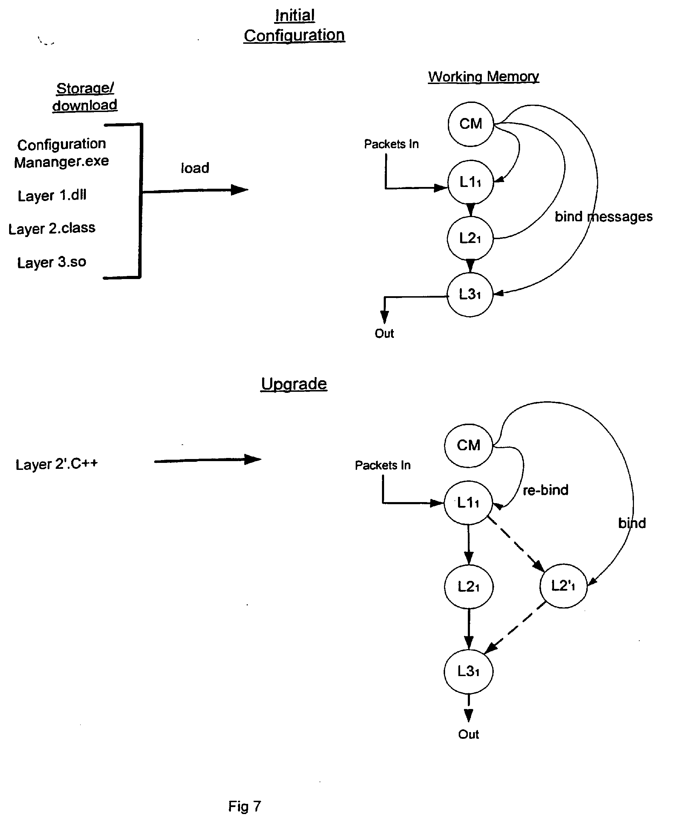

Figure 7 illustrates set-up and upgrade scenarios for instantiating layers and for binding one software layer to another, in a cellular phone for example. The phone either stores or downloads a number of software code modules which are loaded into working memory directly (i.e. natively) or using virtual machine environment mechanisms (such as the Java class loading principle) and the entry points identified. In the example shown this includes layers 1-3 and a configuration manager (CM) which controls the protocol stack's arrangement by loading the code modules corresponding to the software layers into working memory, calling the entry points and sending appropriate bind messages to configure or reconfigure the layers. For example the bind message sent to layer 1 instructs it to "bind" to layer 2.

In an upgrade scenario where layer 2 is replaced by layer 2', the layer 2' software layer file or code module is loaded into working memory (L2') and the configuration manager (CM) calls the layer entry point to the new layer. It then issues a bind message to layer 2', to direct its output to layer 3 and set-up the appropriate protocol options. The configuration manager also directs a bind message to layer 1 to redirect its output from layer 2 to layer 2'. This upgrade reconfiguration happens during run-time and also only requires a relatively simple bind message to implement. It also allows any packets passing through (old) layer 2 (L2) to continue being processed and passed on to layer 3 (L3) so that the associated session is not terminated by the dynamic reconfiguration. Thus there is no need for session termination during reconfiguration of the stack, providing that the new instance has access to the configuration (including state) data of the old instance.

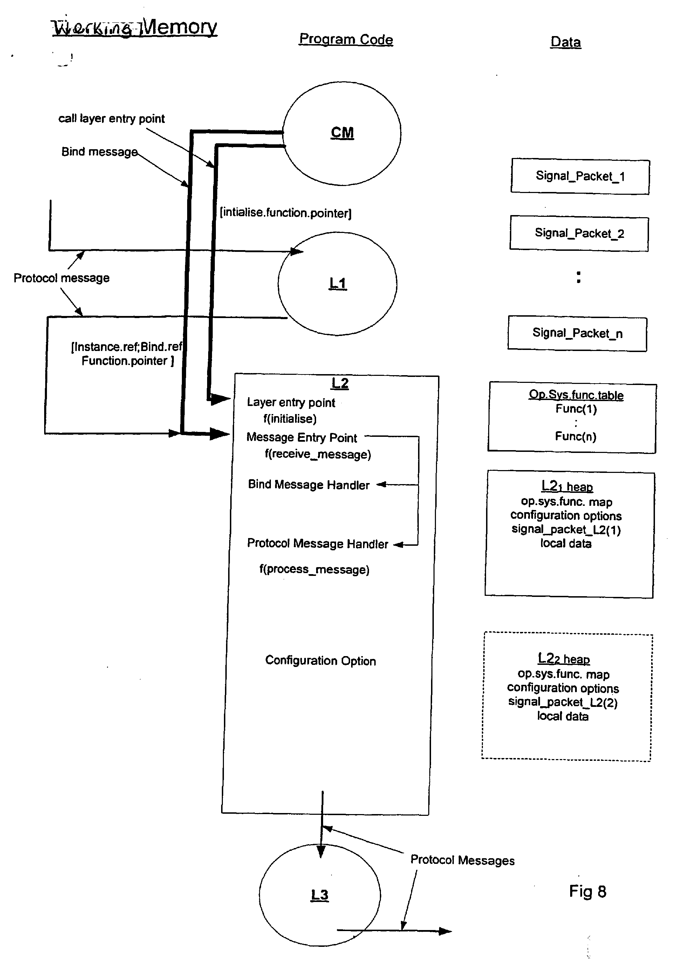

Referring to Figure 8, to instantiate the first instance (L2₁) of layer 2 for example, the configuration manager (CM) loads the layer 2 code module into the program code area of working memory (or the virtual machine environment). The configuration manager then starts a LLI by calling the entry point of the code (layer entry point) in working memory directly in the case of native software modules or calling the layer entry point member function (the run method) in a virtual machine environment.

The CM invokes the loading procedure and so for Java that means loading a class file and for native layers that is loading a section of code into memory in the manner appropriate for the execution environment. As CM knows the execution environment it knows the way to load the module, and pass the default appropriate VOS and/or operating system table (OS). Examples of these are described in more detail further below. In native code layers this could require the invoking of the entry point by locating and executing the entry point function. The entry point function needs to have a default behaviour that enables the bind messages to be received. For example in a Java class this could invoke loading the default VOS and/or operating system specific classes into the JVM in order to be able to then call the receive_message function. In a native layer the entry point could contain a parameter that is a pointer to the default VOS and/or operating system specific (OS) table. Once the module entry point is initialised (for instance it could involve copying of the VOS or OS table and allocating some working or heap memory) it calls the receive_message function in the VOS (or operating system function table) and this then does nothing else until the bind message is received.

The initialise function as stated above is simply the boot-strap method of getting the default VOS (or operating system) table, copying it if necessary (or pointing to its location in shared memory) and calling the receive_message function.

The receive_message function is in the VOS or operating system table (OS) and so it is the VOS or OS that determines how the message is sent (either by function call or operating system thread messaging etc.). The bind message is a specific message type (all messages have a unique identifier to allow determination of the type of message). Therefore, other messages (apart from a terminate which will normally force a clean exit) are ignored when waiting for the bind message.

The bind handler simply calls create_new_LLI which again is a VOS or OS function that could invoke a new thread or process instance or in fact may not do this and just modify the LLI table. However, the configuration information from the bind message is passed to the create_new_LLI function in order to allow the configuration to be set up for that LLI. This includes a reference to the specific VOS and/or OS table to be used by the LLI. This may be different from the VOS and/or OS table copied or used by the initialisation function, for example if the layer needs to pass protocol messages to a layer in a different execution environment. The new thread calls the receive_message function within the specific VOS (or operating system table) to wait for a message to process.

As discussed above, the bind message contains interaction or interfacing information to direct the output of the layer to the next layer. The bind message may also comprise the necessary function calls to do this (the function table). For example an initialisation template of functions or function pointers may be passed to the module entry point, whilst a more specific template of processing functions may be passed to the module by the bind message, depending for example on the configuration options selected for the associated LLI, and/or its execution environment. The CM can then instruct the execution environment specific security mechanisms to allow interaction from the new LLI to permissible other LLI and can optionally set access control mechanisms on shared configuration data to allow access only to the parts of the configuration data that is permissible by the new LLI.

The bind message configuration options can determine the features to enable such as whether or not to enable encryption within the layer by using generic configuration preferences for security, performance and power consumption. Where multiple protocol stack instances are in use simultaneously, there may be multiple LLI per layer, and these are identified with unique instance identifier (instance.ref). It may be that the different LLI of the same layer have different configurations, some supporting encryption and some not for example.

The entry point calling and parameter passing are supported in a generic manner regardless of the specific detail of the implementation. Preferably an ANSI standard C (otherwise referred to as Cdecl) convention is used to pass a parameter for native software modules, (function.pointer) or (start.pointer) for example, to the entry point that provides execution environment related functions such as thread creation and messaging related functions (including configuration data access functions). However, for Java layers the Java class for the software layer extends the *Thread* Java class and the *run* method is invoked automatically when the layer is loaded into the JVM. If the native layer entry point is called to instance a new thread then a new instance is created in a new thread of execution and the entry point returns.

Alternatively, (particularly when the layers execute in virtual machine environment but not restricted to just these layers) the entry point class (or location) can be indicated in a manifest (meta) information file that accompanies the layer software module. When the bind message is processed, the new instance thread is created using create_new_LLI and it now waits for a protocol message using the receive_message function.

Each layer instance configuration data will contain information regarding the next layer instance(s) to send packets or protocol messages such as [signal.pointer]. Thus, when a layer requires sending a packet (contained within a protocol message) to the next layer, the get_attribute function for the bind reference (bind.ref) is used to obtain the next layer instance, to which the message is to be sent, from the LLI configuration data.

When instantiating multiple LLI of the same layer, the bind handler will form a new instance of the configuration data for the new layer instance (in L2₂ stack). The configuration data as stated before will contain the unique identifier for the instance and once the new thread instance has been created an acknowledgement is returned to CM, which can then set up the appropriate execution environment security measures. A bind message can be sent directly by the CM to a LLI to change the configuration of the instance.

As described previously the incoming bind message comprises an instance number [instance. ref]. The bind reference [bind. ref] identifies the LLI for the layer above the present LLI to which output protocol messages should be directed. The function pointer [function.pointers] identifies the operating system function table (OS and possibly VOS) appropriate to the particular LLI, such that when the layer calls one of a predetermined number of functions (for example *"create_new_ LLI"*), the function pointer points to an appropriate location and memory which contains the correctly formatted function call for this function for the particular execution environment or operating system in which the LLI is operating. In other words, the operating system function table maps "generic" function calls within the LLI to the language and operating system dependent functions used by the operating system to carry out these functions. The table of functions will typically include memory access and management functions including accessing signal packets or other messages passed between the layers. Thus for example layer 1 may pass a signal packet (for signal_packet_2) pointer [signal.pointer] to a LLI within layer 2 using the operating system function *send_message.* This allows the layer 2 LLI to access this particular signal packet and further process it according to its internal protocol functions using the functions provided by the operating system function table, and utilizing its own LLI execution stack (L2₁ stack).

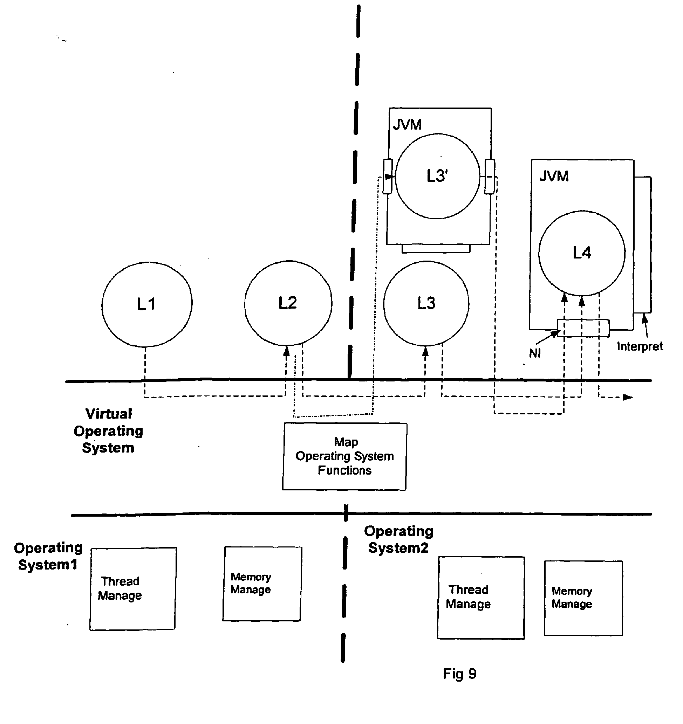

As discussed above, a common platform independent virtual operating system (VOS) function table can be utilised to provide access to the execution environment functions and LLI configuration information. This improves execution environment (operating system and virtual machine) independence, and is illustrated in Figure 9. There are shown five layers (L1 - L4), including an "old" layer 3 (L3) as well as an upgraded layer 3 (L3'). Two of the layers (L3' and L4) are shown operating within a Java Virtual Machine (JVM). The JVM requires an interpreter or virtual machine environment to interpret the code of the software modules corresponding to these layers in real time, and also provides a native interface (NI) for interfacing with non-Java software. The other layers (L1 - L3) are precompiled into object code and executed by the operating system natively at run time.

It also allows multiple execution environments to be provided as shown where operating system 1 and operating system 2 each execute different layers, but the layers can still communicate with each other.

The generic function calls in the layers are converted to actual operating system specific functions using the operating system function tables (OS). In the case of a VOS, a further conversion or mapping is required. The bind message to each LLI provides function pointers to the VOS function table which itself points to operating system specific functions in the OSs to enable the layers to execute. This provides operating system independence, as the VOS function table can be re-pointed at different operating system specific functions. For example the CM can instruct the LLI (via a bind message) to change its VOS table of operating system specific functions corresponding to the generic functions used by the LLI from say UNIX based POSIX functions (OSx) to UNIX based system V operating system functions (OSy) dynamically at run-time. The dynamic changing does however, need care as certain operating specific functions contain or change system state related information (particularly semaphore and other system resource handling functions like memory allocation) therefore, the VOS concept can allow the ability to seamlessly switch between OS environments if necessary by providing intelligence and operating system abstraction within these indirection mechanisms. It also allows software code modules to be written in the most generic manner possible to support different execution environments.

In the protocol software, string manipulation is not often performed, however any frequent operations like "calculate_crc" or "convert_ip_address_2_string" can be included as generic functions with corresponding operating specific functions in the operating system table (OS) or VOS table. In an alternative arrangement, certain signal data manipulation function such as encryption and decryption can be implemented in a generic encryption/decryption layer that can be configured to perform different encryption and decryption operation. This is a layer that contains the most mathematical functions and can use (if necessary) a VOS or operating system table (OS) that has mathematical extensions because it can operate in an execution environment (like a co-processor) with performance accelerators for these complex mathematical functions. Then the other or general protocol layers will use a general purpose VOS or operating system table (OS) without these extensions.

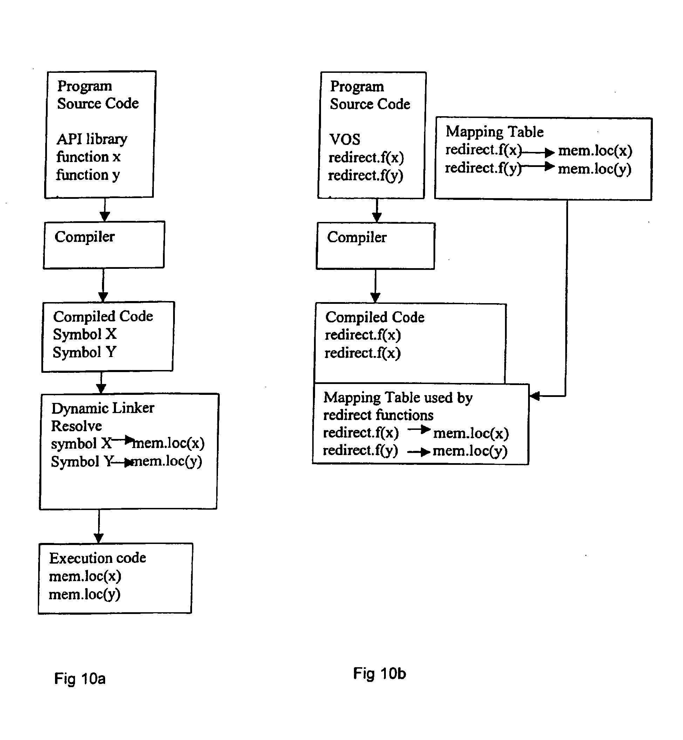

A method by which the function pointers are passed to a module in an execution environment and language independent way is illustrated in figures 10a and 10b. Specifically this shows a native code example, such a C, figure 10a showing a known dynamic linking method, and figure 10b showing a method of passing function table pointers according to an embodiment.

Referring to figure 10a, a vendor of a software module develops a source code program (in this example in the C programming language) comprising a series of API functions (x and y) and variables to interact with data stored in the memory of the target platform (hardware, function library set, and operating system functions such as input/output), and possibly other API library modules operating on the platform. The source code is compiled into object code by a known compiler, which translates the series of functions into binary machine (or object) code specific to the target platform. The binary code comprises a series of placeholders or symbols (symbol X and symbol Y) which each correspond to one of the series of functions (x and y) in the API library modules.

When the object code is loaded into memory on the target platform for execution, a dynamic linker inspects the code and replaces the series of symbols (symbol X and symbol Y) with the memory locations of the API library functions (mem.loc(X) and mem.loc(Y)) in a previously loaded API library module which corresponds to the functions (x and y respectively) in the library source code. If the library module is not already loaded, then it can be dynamically loaded by the dynamic linker (or class loader in the case of a Java based implementation). The platform can then execute the code by stepping the program counter through the series of memory locations containing the program instructions and jumping (branching) to the memory locations corresponding to the API library function calls (mem.loc(x), mem.loc(y)) as required by the software module.

Referring to figure 10b, the vendor (C programmer) of the software module to be loaded on the target develops a source code program comprising a series of API function calls (redirect.f(x) and redirect.f(y)) corresponding to places where the actual API function calls (function x and function y) are used in the approach of figure 10a. The redirect functions simply redirect the function call to the memory location of a specific entry within a specified VOS or OS function pointer table (held at some - unknown at compile time - location in heap or shared memory within an array). The C source code is compiled by a compiler into object code which again comprises binary machine code, however there are no symbols (X and Y) corresponding to the functions in the source code. Instead, the redirect functions are simply compiled into jump (or branch) instructions to the memory location held in an entry (each entry corresponds to one API function) within the memory resident function table that is loaded at run-time on the target platform.

In this manner multiple threads of execution can run the software module code using different API implementation code without any need to dynamically re-link the software module.

The compiler translates the redirect functions to relative memory pointers, which at run-time are relative to the start of the OS or VOS table, and hence point at the appropriate execution environment specific function indicated by the object code. In this case, the source code needs to be written using the redirect functions rather than the API type functions of figure 10a.

In an alternative arrangement, a prior art source code program is translated by a modified compiler into the same object code, the compiler translating the C specific functions (e.g. function x) into redirect function call redirect.f(x) to allow the use of the (dynamically loaded at run-time) function table.

When this software module object code is loaded into memory, it is passed a reference to the platform specific mapping table (such as start address in memory), which corresponds to a placed in heap or shared memory. A default table of function pointers can be loaded at a predetermined relative memory location with respect to the object code is also possible for instances in which the software module does not contain an entry point function or other means to pass in the table reference pointer.

The platform can then execute this object code by running through the series of instructions that are compiled from the redirect.f(x) which re-direct (jump or branches) the program counter to the memory value corresponding table entry (redirect.f(x)) which in is the memory location of the actual OS or VOS library function (mem.loc(x)) on the platform. The function is executed and the program counter returns to where the jump (or branch) occurred in the software module object code

It can be seen that this allows the loadable software modules that are compiled into position independent code (i.e. code that can be executed from any memory address) to be platform independent in the sense that the platform (operating system, dynamic linker or Java virtual machine) does not need to have knowledge of the specific language and semantics of the software module code and how it interacts with other modules. It can also be seen that the source code can be independent of language, as the compiled object code contains the same pointers to the mapping table rather than predetermined symbols that a dynamic loader would need to interpret and replace with memory locations for platform specific functions. For example a program written in C, VisualBasic or Pascal will each be compiled into the same object code of relative function pointers which a passed a starting point in memory where the execution environment specific functions are located, the relative pointers indicating the relative location of the corresponding function from this start point. This allows vendors to provide a software module (object code) which can be written in any language, and which is independent of the platform.

Finally, each thread or process executing the software module code can do so with different library function table mappings to allow the behaviour of the same piece of code to be completely different in the way in which library functions are implemented. Therefore, one thread of execution (on the memory resident binary or byte code module) can call library functions that implement a lightweight set of library functions to optimise for performance and another thread of execution (of the same memory resident code) can use heavyweight library function implementation to optimise for security for instance.

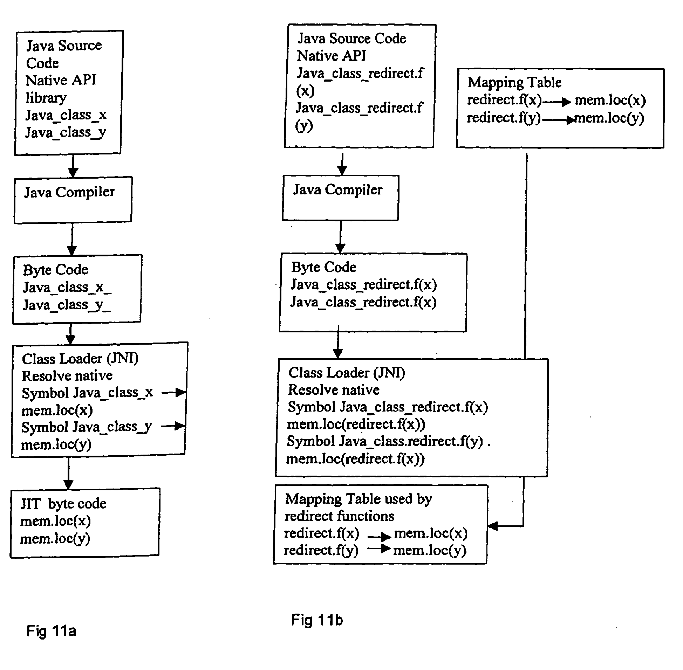

Referring to figures 11a and 11b, a dynamic linking (class loader) and function pointer passing methods are shown respectively, for a Java language based layer program. The main difference between the native and Java software modules is that in Java an extra layer of indirection is introduced to traverse between Java and Native software modules. The Java software module has a Java native interface method redirect.m(x) and redirect.m(y) that correspond to the native library functions Java_class_redirect.f(x) and Java_class_redirect.f(y) respectively. The Java native interface methods are mapped to native functions by the class loader. Normally when using standard JVM class loaders the native library module has to be loaded using the System.LoadLibrary method. However, it is also possible to create a custom Java class loader that may use other methods to load classes and libraries.

Then the class loader will resolve the native symbols used in the Java native interface class (mem.loc(redirect.f(x)) and mem.loc(redirect.f(y))) in this example. These redirect functions will then operate in the same manner as native redirect functions and use the mapping table to redirect the function call to the real functions mem.loc(x) and mem.loc(y).

It is possible that the Java class loader is customised to eliminate this intermediate step of loading native interface libraries as this is obviously performed in a platform specific manner and requires that each platform has the corresponding set of interface libraries to enable the actual native API libraries to be accessed.

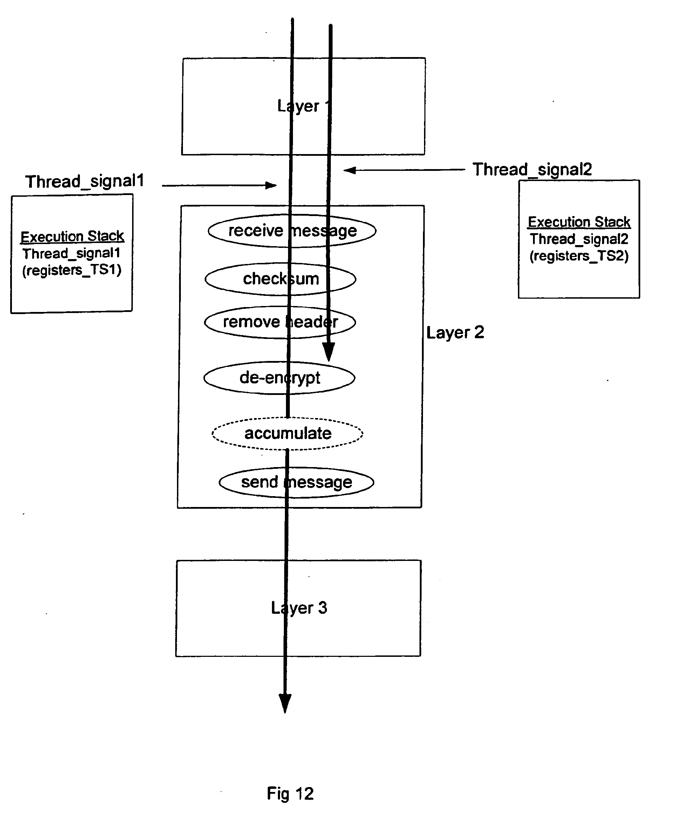

Figure 12 illustrates a thread per message approach to the implementation of the protocol stack. In this approach a thread is associated with each packet or signal traversing the protocol stack. In the example shown thread_ signal1 is associated with protocol message signal1 which is processed by layer1 within the stack instance then continues onto layer2 where the message is processed by the various functions or submodules shown (the packet or protocol message processing part of the code block or module in figure 8), and execution continues on to layer3 where the message is further processed. Similarly thread_ signal2 is associated with protocol message signal2, which is passed through layer1 and on to layer2 where at the particular point in time shown it has reached the "checksum" sub-function of layer2. This approach is similar to existing proposed frameworks however it suffers the drawback that different execution environments with different security and performance configurations that are provided by most multi-tasking operating systems cannot be easily used for distinguishing between different LLI, instead a customised scheduler would need to be implemented that could pre-empt the threads as necessary based on the LLI.

The accumulate function is shown in dashed outline, and not described above for ease of explanation. Where an accumulation function is implemented in the thread per message approach, there are two possibilities for implementation. One is to simply terminate the thread, however this relies on another thread monitoring the buffer in order to serve the buffered packets. The alternative is to return back to the calling function, and then the thread of execution can be used to process another message. This is more attractive than terminating threads because the thread creation latency and overhead can be very high on operating systems unless a very lightweight thread model is implemented.

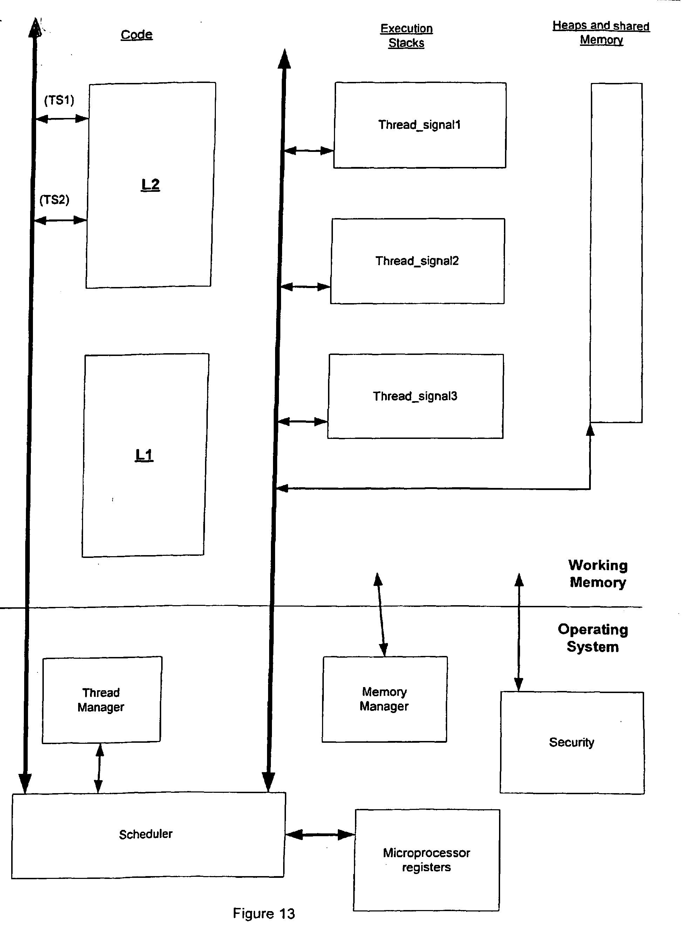

This is seen schematically in Figure 13 in which two code blocks 2 are shown in working memory, together with execution stacks associated with various threads of execution through these code blocks, as well as heaps and other shared memory objects. The various execution stacks will store various parameters such as the current state of the microprocessor registers, static data within functions and code modules and for function call parameter passing. A scheduler and thread manager controls operation of the various threads in a known manner, loading the microprocessor registers with the appropriate contents of a respective stack for the current or live thread, and storing the contents of the registers in the appropriate stack for the thread that has just been switched (known as context switching). It can be seen that for example that the point of execution for thread_signal 1 in the L2 block of code (TS1) has progressed further through the code than thread_signal 2 (TS2) - where (TS1) and (TS2) represent the program counter value for each thread, and therefore indicate which point in the code module to execute next for that thread. Various other execution stacks will be associated with other signals passing through the various code blocks L1-L5 of the protocol stack. It can be seen that each thread is associated with a single signal and "follows it" through the protocol stack in a synchronous manner.

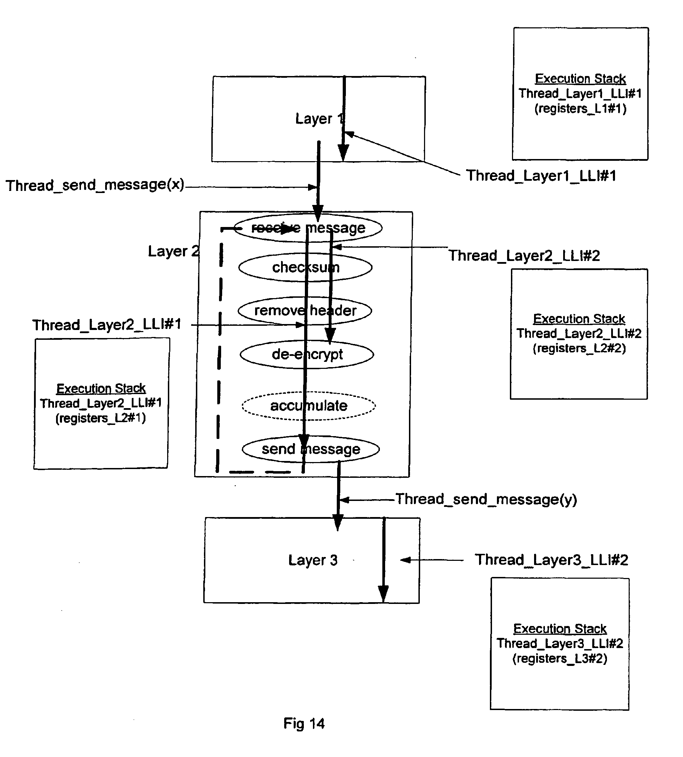

A further embodiment by contrast uses a thread per LLI as illustrated in Figure 14. Thread_ layer2_LLI#1 corresponds to one thread within the layer2 layer or code module, which has received a signal or packet (protocol message) from a lower layer (for example layer1). The thread processes this through the layer's various sub-functions and passes the processed output (signal, packet or message) to a higher layer (for example layer 3). It then returns to the receive message or input function of its associated layer2, ready to process the next protocol message. Similarly thread_ layer2_LLI2 is associated with a separate packet or protocol message in the same layer (layer 2) as the first thread, but in a different instance or LLI. At the point in time shown, this second thread or point of execution has reached the de-encrypt sub-functions of layer2. Once each thread has processed a protocol message through its LLI it returns to the idle state and calls the *receive_message* operating system function to await a new packet from the lower layer. The message passing between the LLIs is handled by the execution environment, possibly using a different operating system thread or process (e.g. thread_send_message(x)) from either of the LLIs involved when the execution environments executing the LLI are resident on separate physical processors. The receive_message function simply waits for and retrieves a message in a predetermined message queue. Similarly the send_message function puts a message on a predetermined message queue.

The advantage of this thread-per-LLI approach over the previous approach is that each LLI can be configured to operate in a different execution environment (if necessary) with different priority (if appropriate) and with different security measures in place to prevent any badly behaved software module from affecting the operation of other LLI.

Again the accumulate function has been shown in dashed outline to simplify the initial explanation, however as this approach to the protocol stack is intrinsically asynchronous in nature (i.e. has accumulation of messages) then it is attractive to use asynchronous message passing so that the messages (packets) are buffered in a common and persistent manner that is accessible to both the sender and receiver. If the accumulation is performed naturally within the layer code (as is the case in the thread per message approach) then the message data must be copied from the sender to the accumulation buffer and then copied again out of the buffer and onto the next layer.

Having persistent shared memory queues allows messages to be posted to queues without the need for any data copying. Copying in protocol stack implementations should be minimised to get good performance. Therefore, if the send_message function simply puts a pointer to the message in the recipients message queue there is no data copying at all and the recipient can still access the data in the same manner. The other advantage is that when one layer instance LLI is being reconfigured (i.e. replaced) with another LLI then the queue is still there and the message data is still there and so nothing is lost and processing can continue as if nothing had happened.

A further advantage is that during upgrading or replacement of a LLI in the stack, protocol messages (signals) being processed by a LLI not being upgraded are not affected. Also, if necessary pre-execution switching can be achieved by re-directing packets destined for the old instance to the queues that will be used by the new instance or by suspending the old instance (and thus prevent further processing by the old version without discarding the packets). This is possible, for example, if the *send_message* and *receive_message* functions are implemented with persistent shared memory queuing and the queues can then be re-associated by the CM sending bind messages to the LLI instance below and above the new LLI version instance prior to the instantiation of the new LLI, as the packets will start to be queued in readiness for the new LLI instance. This approach is attractive because the instantiation of a new LLI can be time consuming and if for example the switch is from an insecure to a secure LLI version the continued processing of packets in an insecure manner may open up vulnerabilities in the system.

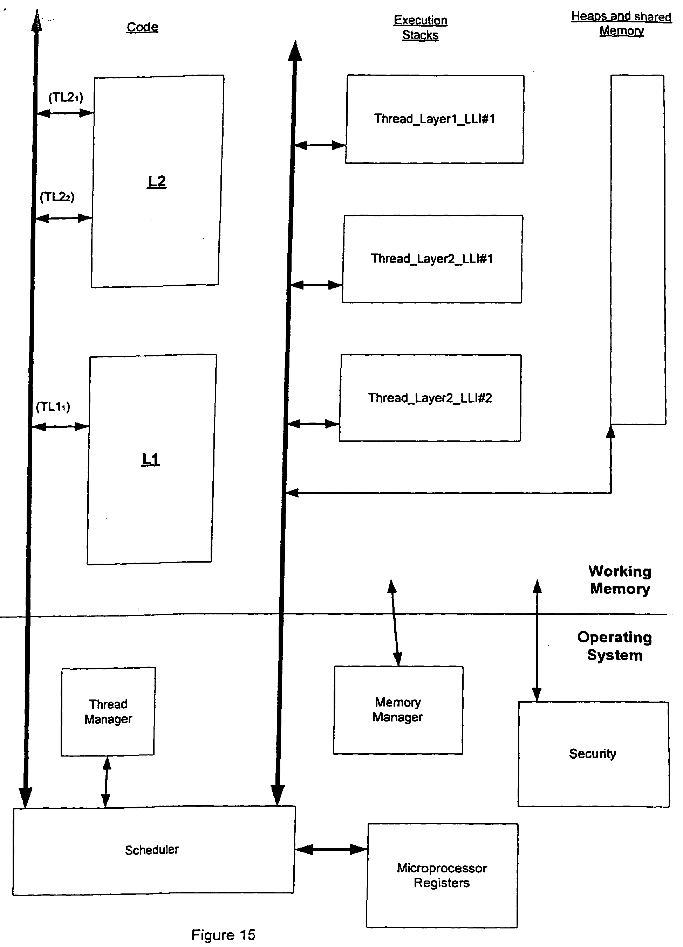

Figure 15 shows a schematic analogous to Figure 13 of the thread per message approach, but showing execution stacks corresponding to a thread per instance approach. For example two threads are shown associated with the layer2 code module, however each is associated with a different instance (LLI) of L2 as opposed to different protocol messages within L2. (TL2₁), (TL2₂) and (TL1₁) illustrate program counter values or positions in the code module for each LLI thread.

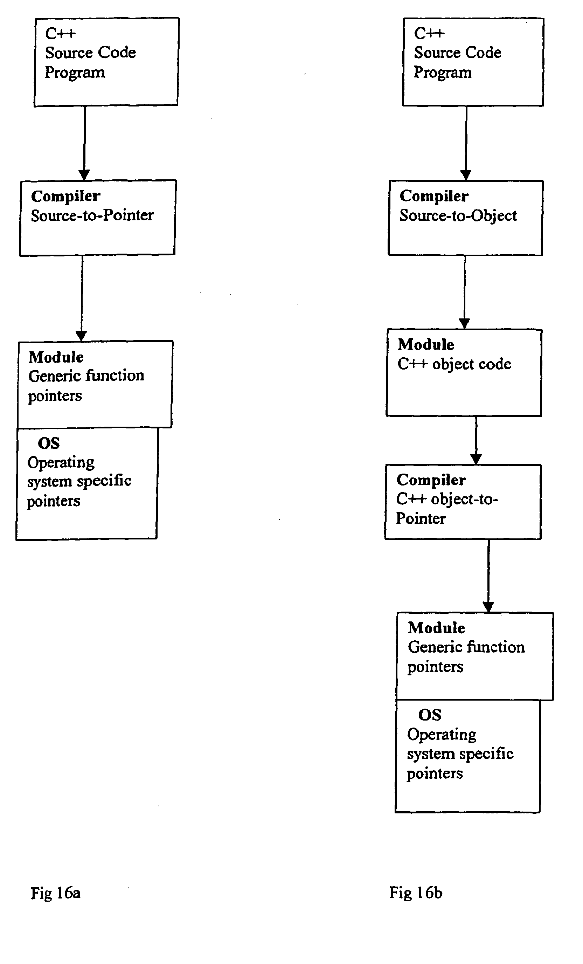

Figures 16a and 16b illustrate different routes for arriving at a code module for application in an embodiment. In figure 16a, a vendor develops a C++ source code program, which is compiled by a "source-to-pointer" compiler in order to translate the source code into a generic execution code module format comprising a series of pointers corresponding to generic functions in a functions template. The pointers are in a common data format as previously described, and are relative memory pointers to corresponding operating system specific functions in an OS table or object. For example, a first generic function (e.g. Func#1, which is create_new_LLI) corresponds to a first operating system specific function in the OS. Knowing where the corresponding OS is in memory, the execution environment is then pointed to properly formatted execution environment specific functions in the OS as it executes the module.

In an alternative arrangement shown in figure 16b, the vendor develops the same C++ source code program, which is then compiled by a standard C++ compiler into a platform specific C++ code module. A further compiler is then required to convert this module into a generic function pointer code module as described above and suitable for execution with the OS (and in some embodiments a VOS).

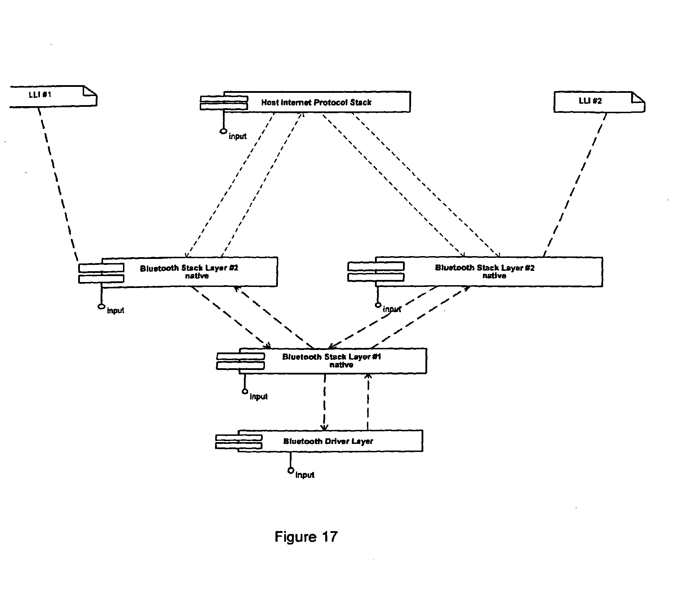

Figure 17 shows an example implementation using some of the embodiments described above. A terminal device with Bluetooth capability runs a standard Bluetooth protocol stack within native language software layers (software layers #1 and #2). The Bluetooth stack uses the above-described Bind functionality that enables the platform operating system and language independent protocol layers to be dynamically linked together. Two protocol stack instances are shown (Instance#1 and Instance#2) can be configured to provide different Bluetooth services. For example, a LAN access profile instance and a voice over IP or Bluetooth network encapsulation profile instance. The LAN access profile is then used to perform web browsing using a private Bluetooth access point and the voice over IP profile is used to make telephone calls via the same access point at the same time.

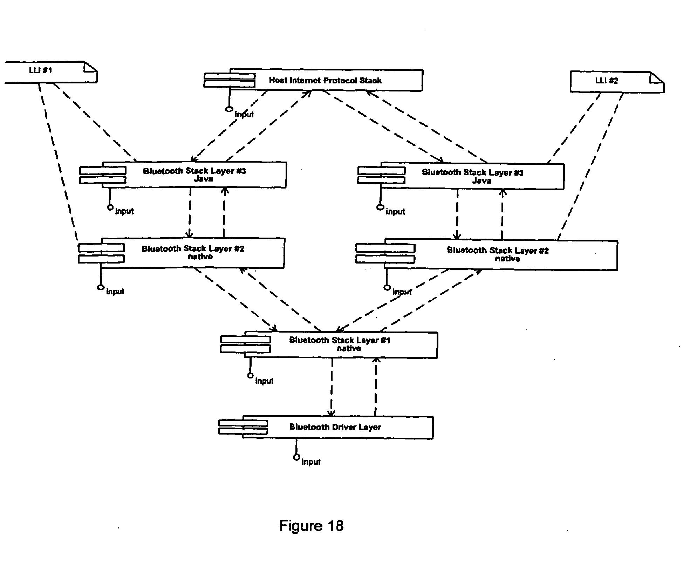

The Bluetooth stack can then be customized by adding support for a new profile using a downloaded Java layer (layer #3) as shown in Figure 18. This layer provides (for example) enhanced security or performance or new service functionality. The Java layer is dynamically loaded and new layer instances (LLI#1 and LLI#2) bound to the existing native language Bluetooth stack without the need to restart the Bluetooth stack by virtue of the embodiments utilised. Therefore, existing Bluetooth connection sessions are not disrupted. The new layer can then be used to instance an enhanced security profile that is used to encrypt and decrypt the data between the terminal and access point.

To support operating system independence, the operating system function table of the platform specific functions necessary to be used within the module for interacting with other modules within the protocol stack (for example functions to allow shared memory allocation and thread messaging etc.) is used. The bind message will also determine which other modules are allowed to interact with it and execution environment mechanisms will exist to verify the authenticity of these sources. The bind message must also contain all the necessary initial configuration data required by the protocol layer.

The layers within this Bluetooth stack are instanced using different threads of execution and each layer utilises the VOS or OS *receive_message* and *send_message* as the protocol message entry and output points respectively to allow the VOS or OS to implement interaction mechanisms appropriate for the chosen execution environment of the LLI. The threads or processes can be identified by the unique LLI name, which consists of a unique layer name ("Bluetooth stack layer #3" in this case) and a layer instance identifier ("LLI#1" and "LLI#2" in this case). In this manner the thread name is used to uniquely identify the layer instances. The VOS and OS can employ operating system specific mechanisms to support the interaction between LLI and scheduling of the LLI threads and processes or proprietary and highly optimised mechanisms can also be employed. This can be optimised in terms of security, performance or even in terms of resource utilisation such as memory and power consumption.

This approach enables LLI to be generated with different configurations. Each LLI is configured during the binding process with a bind signal which identifies not only the other LLI with which the LLI will communicate but also the configuration data to use for the particular instance.

The VOS supported LLI message queues can be held in a persistent shared memory to enable dynamic upgrading of software while the protocol stack is still active. The rebinding of LLI is also possible to permit the insertion of layers into active protocol stacks.

The process of configuring a new layer (Bluetooth stack layer #3) into the protocol stack is as follows:
1. The first step is to start execution of "Bluetooth stack layer #3" by calling the associated module entry point. In the case of Java module the class file is loaded into the JVM environment selected by the CM. The module loads the default VOS or OS API if it is not already loaded. Then the *run* method is automatically called by the JVM and the layer software (module) calls the load_template function in order to be subsequently able to access configuration and message data and calls the receive_message function to wait for a bind message.
2. A bind message is passed to the "Bluetooth stack layer #3" thread with the necessary configuration information,. The thread then creates the new LLI instance by calling the VOS or OS *create_new _LLl* function. Within the new LLI the LLI specific VOS and/or OS table is loaded if necessary. The thread "Bluetooth stack layer #3 instance #1" is created and an OK response is sent back. The new LLI executes the generic load_template function (if a different template is required) to allow access to the messages and configuration data and then calls receive_message in order to wait for the next message.
3. A rebind request message to "Bluetooth stack layer #2 instance #1", which responds with an OK message to confirm the rebinding and all subsequent packets originally destined for the "Host Internet Stack" are now sent to "Bluetooth stack layer #2 LLI #1".
4. A rebind message to "Host Internet Stack" and the routing tables are updated and an OK response is received.
5. The LLI #1 is now active the same procedure is repeated for layer #3 LLI#2.

In order that the Java Bluetooth stack layer #3 can easily interoperate with the native language Bluetooth stack layer #2 and Host Internet Stack, the above described common VOS and/or OS supported mechanisms for interaction and thread and process scheduling are used. The method used for accessing this common functionality in a platform independent manner is by means of dynamically loadable VOS and/or OS function libraries.

When the "Bluetooth stack layer #3" thread is instanced within the JVM environment a Java call to load a default VOS and/or OS library is made. The VOS and/or OS library contains a set of system resource related handling functions. These include as a minimum :
- Signal and memory allocation functions
- Thread creation (and destruction) functions
- Message sending and receiving functions
- Configuration and signal data access functions

The VOS and/or OS library of functions is subsequently used to communicate with other LLI and access configuration data (using the appropriate loaded template). The generic LLI and VOS functions can be supported on a number of different operating systems and can be accessed from many different languages and virtual machine environments. The library of functions also provides controlled access to message queues, signal and configuration data. For example, the library of functions can restrict the access to configuration data based on LLI identifier and also control the use of message sending and receiving to appropriately authorized sources and destinations. In this manner a secure language and operating system independent protocol stack execution environment is created.

In this manner for example "Bluetooth stack layer #3 LLI #1" can be created with a certain set of encryption functionality settings. These settings can be different in "Bluetooth stack layer #3 LLI#2" and are defined in the binding message used in the binding process. Then it is not possible for LLI#2 to access the parameters of LLI#1 and vice versa and also it is not possible for LLI#1 to intercept packets intended for LLI#2 and vice versa.

However, the loading of an entirely new layer of functionality (as defined by computer executable instructions) into a protocol stack may be difficult in some circumstances, as it can expend substantial memory resource in the computer in which the protocol stack is defined.

If memory is a scarce resource in the computer, then the dynamic loading of additional layers is undesirable as it requires the reservation of further memory resource for the machine code instructions defining the additional layer. This can lead to poor performance or malfunction of the computer.

Further, in practice, an additional layer may in fact be defined by substantially the same machine code instructions as the layer of the protocol stack it is intended to replace, except for specific parts of its functionality. Thus, in use, an instance of a protocol stack including an additional layer would need to store two copies of many instructions, pertaining to functionality of the replaced layer that had not been enhanced by the introduction of the additional layer. While in a computer with substantial memory resource, this is not a practical problem, it is always desirable to find ways of reducing memory expenditure in a computer as this can enable the running of further functionalities in parallel with the protocol stack.

A layer in a protocol stack will conventionally be designed to exist in one of a number of predetermined states. A layer in a particular state will be configured to be operable to receive and respond to certain messages, a message either transforming the layer into another of the predetermined states, or to leave the state of the layer unchanged.

The conditional transitions of a layer between these predetermined states depends on the receipt of protocol messages by the layer. The effectiveness of the layer to behave flexibly is enhanced by allowing messages to be handled regardless of computer programming language utilised, i.e. promoting language independence.

To enable effective and consistent design of layers, and implementation through the design of suitable software, a designer may firstly determine the states of the layer, and the transitions between the states that describe the desired behaviour of the layer in response to received messages. Thus, each state of a layer is implemented by a functional module.

A module defines a self-contained functionality of the computer capturing messages that apply directly to it, while disregarding messages that do not, for processing by another module handling the behaviour of the layer when it is in another state. In this manner, when a layer is within a particular state, modules corresponding to other states which the layer is capable of occupying can, in one embodiment, be dynamically removed from the working memory of the computer. This is advantageous as it can lead to the saving of memory resources.

Therefore, in the context of the layer as a plurality of functional modules defining states, and with predetermined transitions between states in response to received messages, it is possible that the desired introduction of further functionality into the layer requires change to only one of the state defining modules.

In the above example, it would be necessary to replace the whole layer, whether or not a significant proportion of the corresponding machine code instructions pertaining to the replacement layer were identical to the instructions for the original layer. This would firstly expend memory unnecessarily, but would also mean that the act of loading the new machine code instructions into the computer, by whatever means, would involve loading instructions that were already present in the computer.

It would thus be desirable to be able to load only the machine code instructions defining the state, within the state machine, that need to be changed, and not the entire state machine defining the layer. This would be advantageous in that it would, on the one hand, lead to a solution which is less expensive of memory, and which can be achieved through transfer of fewer machine code instructions over a transmission link with limited transmission resource.

It will be appreciated that the facility to reduce the amount of data transmitted to a computer represents an operational improvement. Thus, it would further be desirable to provide a facility to a computer executing a state-based layered protocol stack, to enable improvements to a layer to be effected by the introduction of a replacement functionality of the layer, while other, unchanged, functionality of the layer remains implemented by previously loaded machine code instructions.

One aspect of the invention provides a method of modifying a communications protocol for processing a signal provided in a processing apparatus having a processor and memory, the protocol defined by a plurality of protocol layers, at least one layer being in use capable of occupying one of a plurality of predetermined states wherein each state has associated with it a predetermined functionality including message dependent transition of the layer into one of the other states; the method comprising:
loading a software update module into memory, the module arranged to receive and process one or more messages corresponding to one of said states of one of said layers, the module comprising at least one message dependent transition unit operable to cause transition of said layer into another state.

Preferably, the module is operable to intercept messages intended for the predetermined functionality implementing said corresponding state, and to pass on to said predetermined functionality messages unrelated to said message dependent transition unit.

In a preferred embodiment of the invention, the update module is operable to receive and process a message and to cause transition of said layer into another state, said message being inoperable to cause transition in said layer prior to loading of said module.

The update module may be arranged to exchange protocol messages corresponding to said signal with other modules, the other modules arranged to process said signal according to a set of generic functions corresponding to other said layers.

The method may further comprise loading said other software modules into the memory, the other modules comprising generic function pointers corresponding to said generic functions in a function mapping object;
for each other module loading said function mapping object into the memory, the object comprising apparatus specific function pointers corresponding to the generic functions in order to map a said generic function to one or more apparatus specific functions;
executing the other modules according to said mapped apparatus specific functions in order to process received signals according to said protocol layer.

Preferably, the method further comprises the or each loaded software module receiving a bind message comprising an identifier for another said module, the first module arranged to exchange protocol messages with the other module identified by a bind message.

The module may have different configuration options for processing said protocol messages.

The bind message may comprise an identifier for determining which said configuration options to implement in the execution of said module.

The protocol messages, the bind messages and the generic function pointers may be in a common generic format.

Preferably, the method further comprises loading a second software module into the memory, the second module arranged to receive and process said signal according to a set of generic functions corresponding to a second of said layers, the second module comprising generic function pointers corresponding to said generic functions in a second function mapping object, loading said second function mapping object into the memory, the object comprising second apparatus specific function pointers corresponding to the generic functions in order to map a said generic function to one or more second apparatus specific functions, and executing the second module according to said mapped second apparatus specific functions in order to process received signals according to said protocol layer; such that the first and second modules are executed in different execution or apparatus specific environments.

The update module may be language independent.

High-level software language code may be provided for processing said signal according to said set of generic functions corresponding to a said layer; and compiling said code into said language independent software module.

A second aspect of the invention comprises a program for controlling a processing apparatus to carry out the method of the first aspect of the invention in any preferred form.

A storage medium may be provided, bearing data which, when loaded into configurable apparatus, enables a program to be executed to cause the configurable apparatus to carry out the method of the first aspect of the invention in any preferred form.

A signal may be provided, bearing data which, when loaded into configurable apparatus, enables a program to be executed to cause the configurable apparatus to carry out the method of the first aspect of the invention in any preferred form.

According to a third aspect of the invention, there is provided apparatus for modifying a communications protocol for processing a signal provided in a processing apparatus having a processor and memory, the protocol defined by a plurality of protocol layers, at least one layer being in use capable of occupying one of a plurality of predetermined states wherein each state has associated with it a predetermined functionality including message dependent transition of the layer into one of the other states; the apparatus comprising means for loading a software update module into memory, the update module being arranged to receive and process one or more messages corresponding to one of said states of one of said layers, the module comprising at least one message dependent transition unit operable to cause transition of said layer into another state.

A fourth aspect of the invention provides a configurable apparatus configured as apparatus as in the third aspect of the invention.

### BRIEF DESCRIPTION OF THE DRAWINGS

Specific embodiments of the invention will now be described, by way of example only, with reference to the accompanying drawings, in which:
Figure 1a shows a communications protocol stack of an illustrative background example as described above;
Figure 1b shows a notional layer of the communication stack of Figure 1a as described above;
Figure 2 shows a known architecture for implementing a dynamically re-configurable communications protocol stack as described above;
Figure 3a shows an architecture for a dynamically reconfigurable protocol stack according to an illustrative background example as described above;
Figure 3b illustrates a bind message as described above;
Figure 3c illustrates a function pointer table as described above;
Figure 3d illustrates a protocol message as described above;
Figures 4a, 4b, 5a, 5b illustrate multiple illustrative examples of layer software and operating system specific mapping objects as described above;
Figure 6 illustrates multiple instantiation of layers according to an illustrative example as described above;
Figure 7 illustrates the instantiation and binding of software layers in a protocol stack according to the illustrative example as described above;
Figure 8 illustrates a block code representation of an illustrative example as described above;
Figure 9 illustrates a virtual operating system according to an illustrative example as described above;
Figure 10a and 10b show a known dynamic linking method and an operating system function table passing method respectively, for C code as described above;
Figure 11 a and 11b show a known dynamic linking method and an operating system function table passing method respectively, for Java code as described above;
Figure 12 shows a known thread per message protocol stack architecture as described above;
Figure 13 shows a schematic memory architecture for the example of Figure 10 as described above;
Figure 14 illustrates a thread per layer architecture according to an illustrative example as described above;
Figure 15 shows a schematic memory architecture for the example of Figure 12 as described above;
Figure 16a and 16b show two methods of compiling high level source code into modules for use in an example as described above;
Figure 17 illustrates an illustrative example implementation of a Bluetooth™ complex protocol stack;
Figure 18 illustrates an upgraded Bluetooth™ protocol stack of the illustrative example as described above;
Figure 19 illustrates a layer of the protocol stack previously described, in the context of the above description of a state based functionality;
Figure 20 illustrates a function lookup table of the layer illustrated in Figure 19;
Figure 21 is a schematic diagram of a communications device configured by a layer based protocol stack including the layer illustrated in Figure 19;
Figure 22 is a schematic diagram of a system, including the communications device of Figure 21, in which updates of the protocol stack are available for download;
Figure 23 is a further illustration of the communications device illustrated in Figure 21, incorporating a first upgrade of a layer of the protocol stack;
Figure 24 illustrates a first upgraded state module of a layer of the protocol stack configuring the communications device illustrated in Figure 23;
Figure 25 illustrates the communications device illustrated in Figure 21, including a second upgrade of a layer of the protocol stack configuring the communications device;
Figure 26 illustrates the second upgrade module enhancement incorporated into the communications device illustrated in Figure 25; and
Figure 27 illustrates an enhanced state transition diagram for the layer, illustrated in Figure 19, including the module enhancement illustrated in Figure 26.

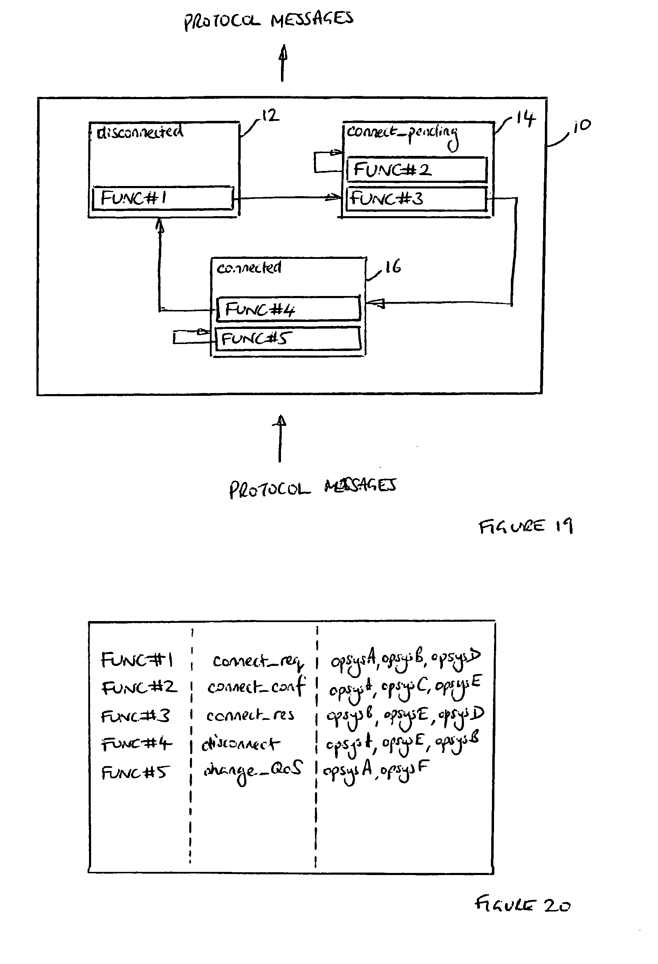

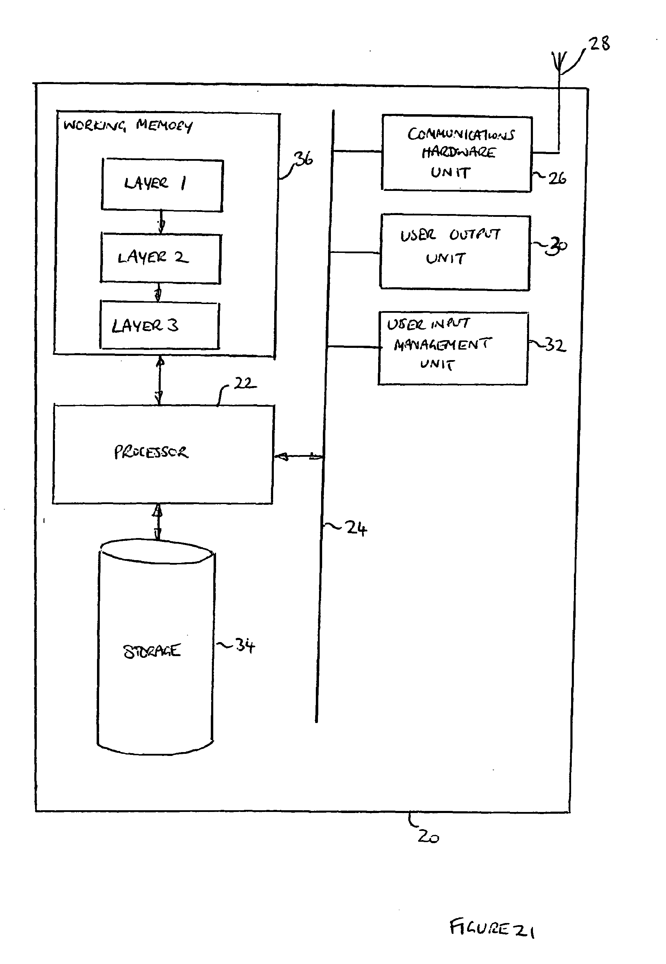

As illustrated in Figure 19, a layer 10 of a commonplace protocol stack (illustrated in Figure 21 to be described in due course) has three possible states, and transitions are defined between those states. In the present example, the three states comprise a disconnected state 12, a connect_pending state 14 and a connected state 16.

The disconnected state 12 comprises a state message handling function pointer FUNC#1. The connect_pending state 14 includes two message handling function pointers, FUNC#2 and FUNC#3, and the connected state 16 also includes two message handling function pointers FUNC#4 and FUNC#5.

The function pointers are operable to detect protocol messages received by the layer, and when the layer is in the corresponding state 12, 14, 16, responding to receipt of an appropriate message by accessing corresponding operating system functions. These functions result in the generation of further protocol messages for transmission further along the protocol stack.

Figure 20 illustrates the relationship between the message handling function pointers FUNC#1 to FUNC#5, and operating system functions. The message handling function pointers will correspond to operating system functions, or sequences thereof, to access system or execution environment resources in the intended manner.

For clarity, the message handling function pointers correspond with identifiable actions, associated with the labels connect_req (a connect request function), connect_conf (a confirm connection function), connect_res (a response to connection request function), disconnect, and change_QoS (a change quality of service function).

As shown in Figure 21, a communications device 20 includes a processor 22 capable of executing machine code executable instructions, connected via a bus 24 to a communications hardware unit for establishing physical connection via an antenna 28 with a wireless communications link to another device, a user output unit 30 for establishing output of data (by audio or display means) with a user, and a user input management unit 32 for detecting user input action on appropriate input devices.

It will be appreciated that the user input management unit 32 may accept user input actions such as actuations of a keypad, a pointing device on a screen, a tablet and writing implement, direct stylus actuation on a screen, speech input and appropriate interpretation thereof, and also advanced input techniques such as line of sight, etc. the processor 22 is also able to make reference to a storage device 34 which may include internal memory and/or a removable storage memory such as a subscriber identity module (SIM).

The processor 22 further is in communication with a working memory 36, in which, in the present example, is stored a protocol stack comprising three layers, namely, layer 1, layer 2 and layer 3, and also protocol layer instance configuration data (each instance being configurable in a different way).

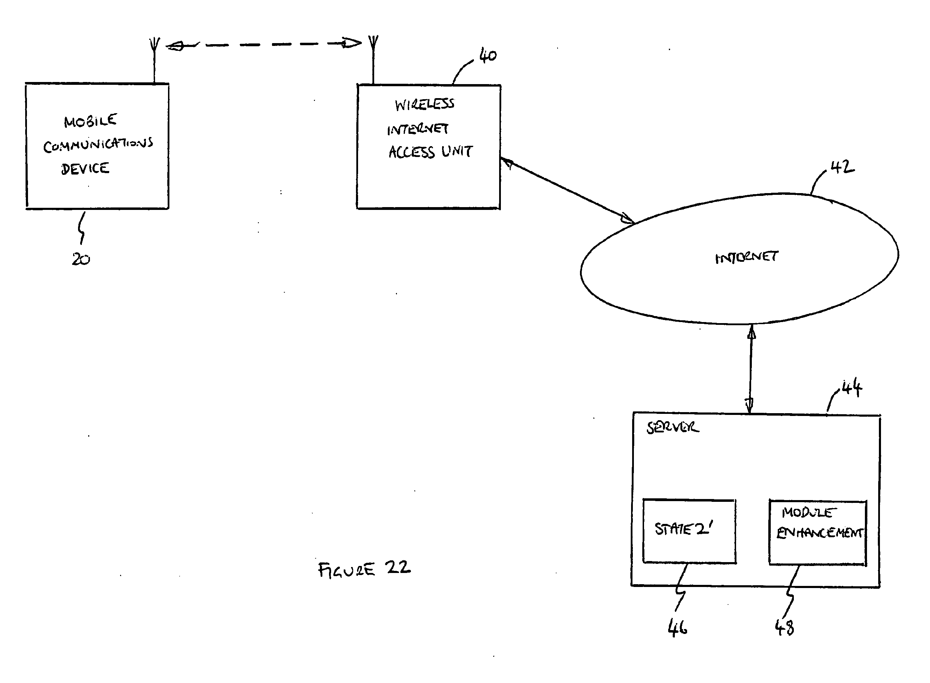

In use, as illustrated in Figure 22, the mobile communications device is capable of establishing wireless communication with a wireless internet access unit 40, which is thereby able to establish connection with the internet 42, and thus with a server 44 of which is posted, by appropriate means, a first upgrade unit 46 comprising an enhanced second state (the connect_pending state 14), and a second upgrade unit 48 comprising a module enhancement to several of the states.

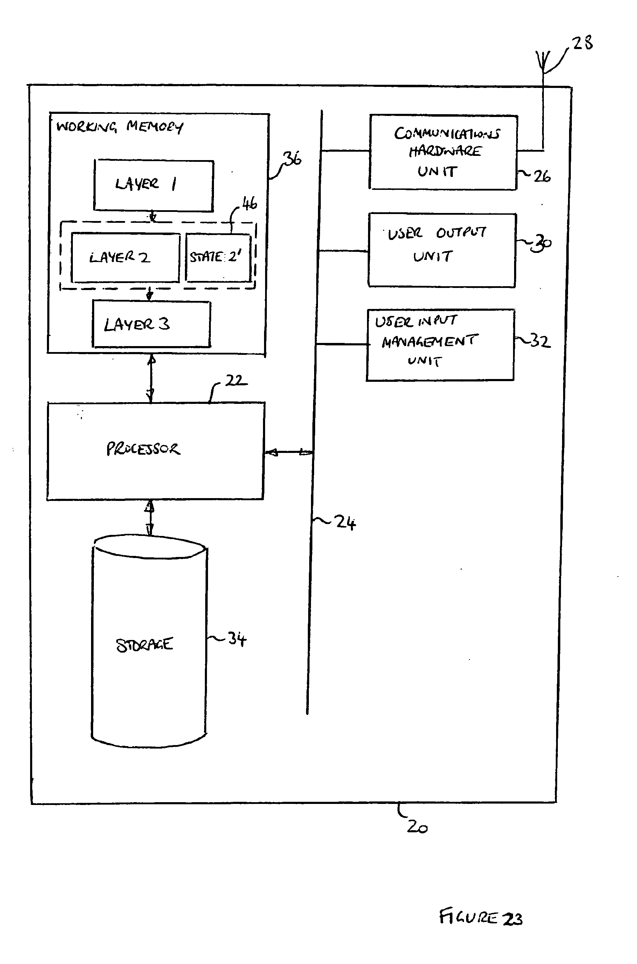

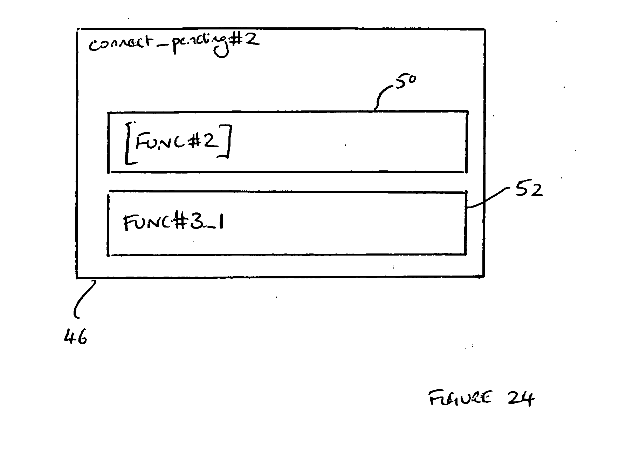

As illustrated in Figure 23, the communications device 20 as illustrated, having received, by any suitable means, a copy of the module 46 including the enhanced functionality of the second state. By virtue of this storing of this module 46 in working memory 36, the operation of layer 2 is enhanced. The means by which this is achieved will now be described with reference to Figure 24. As illustrated in Figure 24, the connect_pending#2 state module comprises a redirection function 50 corresponding with original function pointer FUNC#2, and an updated function pointer 52 corresponding with function pointer FUNC#3 in the original connect_pending state 14. In the light of its updated nature, this function pointer 52 is named FUNC#3_1.

In use of the layer 10 as illustrated in Figure 19, when the layer 10 is in a condition whereby state 14 is active, protocol messages corresponding to the handling function pointers FUNC#2 or FUNC#3 can be expected. In the case illustrated in Figure 19, receipt of a protocol message causing function FUNC#2 to execute causes no transition of state. In contrast, calling of function FUNC#3 causes transition of state from the connect_pending 14 to the connected state 16. With the updated module 46 defining a connect_pending#2 state extension, when the layer 10 is within the connect_pending state 14, the extension 46 supersedes the original state message handling function and is operable to receive the protocol messages. In use, a protocol message corresponding with handling function FUNC#2 is captured by a redirect function pointer 50, which corresponds to the original function pointer FUNC#2 in the connect_pending state 14.

On the other hand, if a protocol message is received which corresponds with message handling function FUNC#3, then the updated function unit FUNC#3_1 (reference numeral 52 in Figure 24) captures the message and causes execution of the new message processing code within module 46. In this way, enhancements can be made to functionality defined in originally provided states. Then, the updated code execution via function pointer FUNC#3_1 causes transition of state from the connect_pending state 14, to the connected state 16.

The transition of state is achieved by virtue of the common shared configuration data described above. The configuration data holds (in addition to the parameters defining the configuration of optional protocol layer features) a function pointer table that has entries corresponding to message handling function for each state of the protocol layer state machine instance. When a new layer instance is created, the configuration data must be sent to the layer instance in the bind message. Therefore, if the configuration data sent to the module (for example module 46) is based on the configuration data of the existing layer 2 instance the module (in the bind handler function) can override and add entries (if necessary) to the function handling pointer information corresponding to the messages handled by the new module. In this case FUNC#1_1 and FUNC#3_1 override existing FUNC#1 and FUNC#3 respectively. However, no entries can be deleted. The following table sets out an illustrative example of such a function pointer table:

| **State name (layer instance 2)** | **State Instance ID** | **Message Handling Function Pointer** |
|---|---|---|
| disconnected | L2-DISCONNECTED | FUNC# 1 |
| connect pending | L2-CONNECT_PEND | FUNC#2 |
| | | FUNC#3 |
| connected | L2-CONNECTED | FUNC#4 |
| | | FUNC#5 |

| **State name (layer instance 2')** | **State Instance ID** | **Message Handling Function Pointer** |
|---|---|---|
| disconnected | L2'-DISCONECTED | FUNC#1_1 |
| connect pending | L2'-CONNECT_PEND | [FUNC#2] |
| | | FUNC#3_1 |
| connected | L2'-CONNECTED | [FUNC#4] |
| | | [FUNC#5] |

The configuration data also holds a *CurrentState* pointer that is used to determine which signal handling functions to execute in the table. The code that realises the signal handling functions themselves is independent of programming language and operating system by virtue of the use of the operating system and virtual operating system respectively as described previously.

There are two main methods to achieve the reconfigurable state machine implementation using the operating system (or virtual operating system) table concept. The first, the thread per layer instance approach, assumes that there is a thread of execution per logical layer instance that handles all incoming messages. The thread then calls the corresponding message handling functions corresponding with the message type (for example as obtained via the VOS function call get_message_type). The table corresponding to the layer instance can then be used to execute the corresponding function for the current state (as obtained from the *CurrentState* attribute). Changing state is simply achieved by calling the appropriate function to change the *CurrentState* attribute to the pointer reference obtained from the configuration data table corresponding with the next state name (i.e. state that will become the current state after changing the attribute).

The second approach is to have a logical thread per message handling function. This does not necessarily correspond to a real operating system thread but could be a VOS thread (if the VOS implementation is being employed). Each time a state transition is initiated, by calling a VOS function change_state (new_state_name), the change_state function initiates new VOS threads for the message handling functions in the configuration data table corresponding to the logical layer instance. The first operation that the message handling function invokes is the VOS receive_message function for a specific message type. In this manner the VOS will then forward only the required messages to he message handling function. This approach also requires that message handling threads corresponding to no longer current states are terminated or suspended.

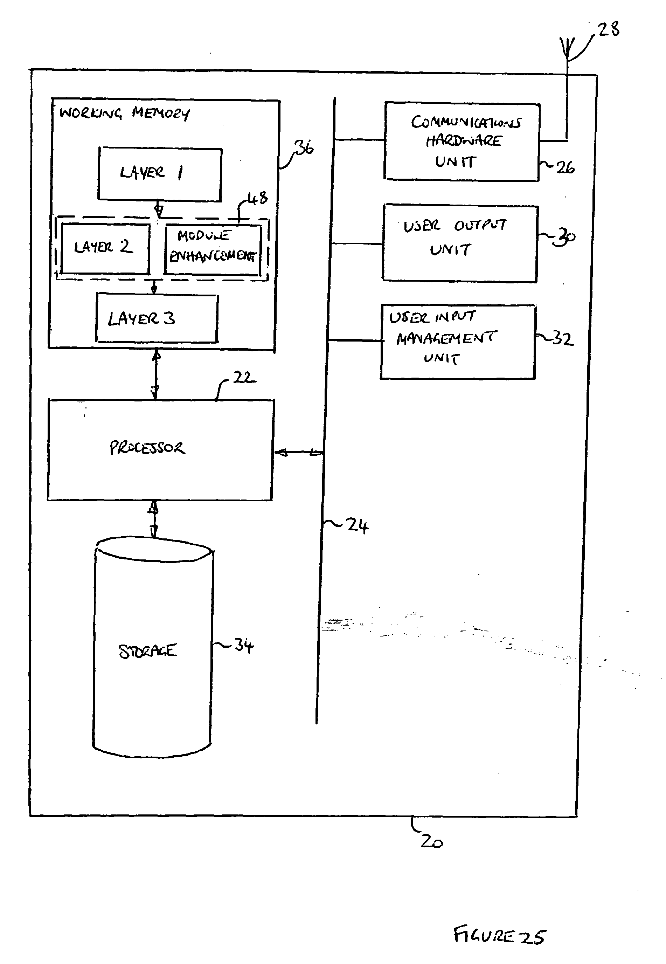

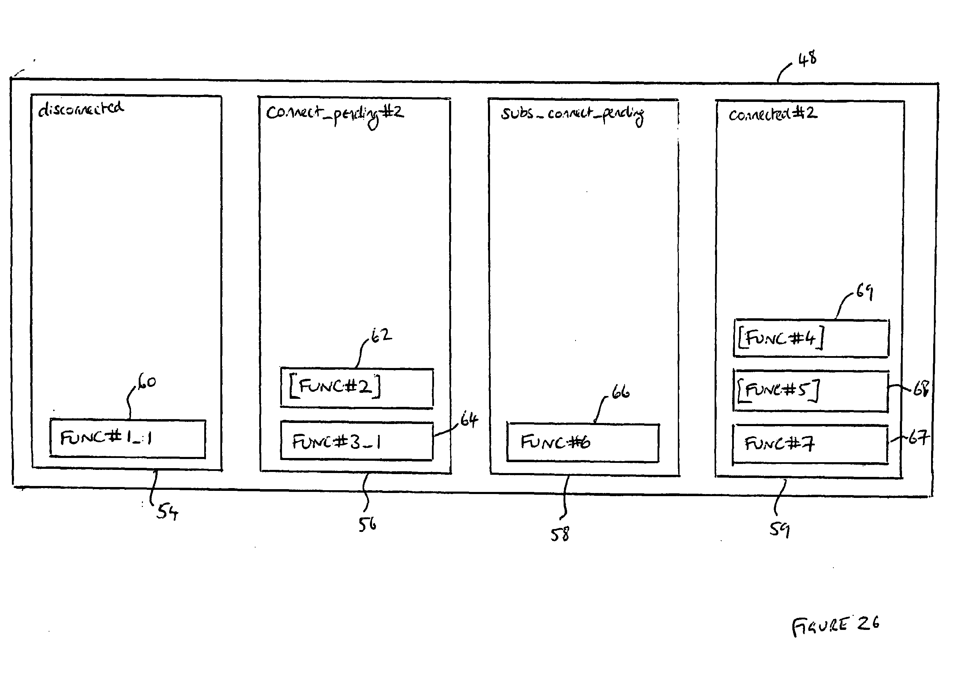

Figure 25 illustrates the communications unit 20, having retrieved the module enhancement unit 48, for operation in conjunction with layer 2 of the protocol stack, in working memory 36. Operation of the protocol stack, incorporating the module enhancement unit 48, will now be described with reference to Figure 26.

Figure 26 illustrates the module enhancement unit 48, as comprising an updated disconnected state disconnected#2 54, an updated connect_pending state connect_pending#2 56, a new subs_connect_pending state 58 which is to be used in the establishment of a second connection for hybrid network system using two modes (or networks) simultaneously, and a connected#2 state module 59 which is to be used to enhance the functionality of existing connected state 16 in view of the introduction of the additional system functionality provided by the subs_connected_pending state 58.

The disconnected#2 state includes a function pointer FUNC#1_1 which points to an enhanced connect_REQ function, the connect_pending#2 state extension 56 incorporates a redirect function pointer 62 which corresponds to the original function pointer FUNC#2 of the originally implemented connect_pending state, and a pointer to an enhanced function FUNC#3_1 (reference number 64 in Figure 26) which captures messages in lieu of original function pointer FUNC#3 in originally implemented connect_pending state 40.

Further, the new state module 58 describing the subs_connect_pending condition includes a pointer 66 to a function FUNC#6 which, in use, will enable activation of a subsequent connection to a second network that is used in conjunction with the first connection as defined now in the connected#2 state enhancement, to implement load sharing functionality contained in a new function FUNC#7.

The new connected#2 state module 59 includes message handling pointers 67, 68 to existing functions FUNC#4 and FUNC#5 and a message handling pointer 69 to the new load sharing function FUNC#7.

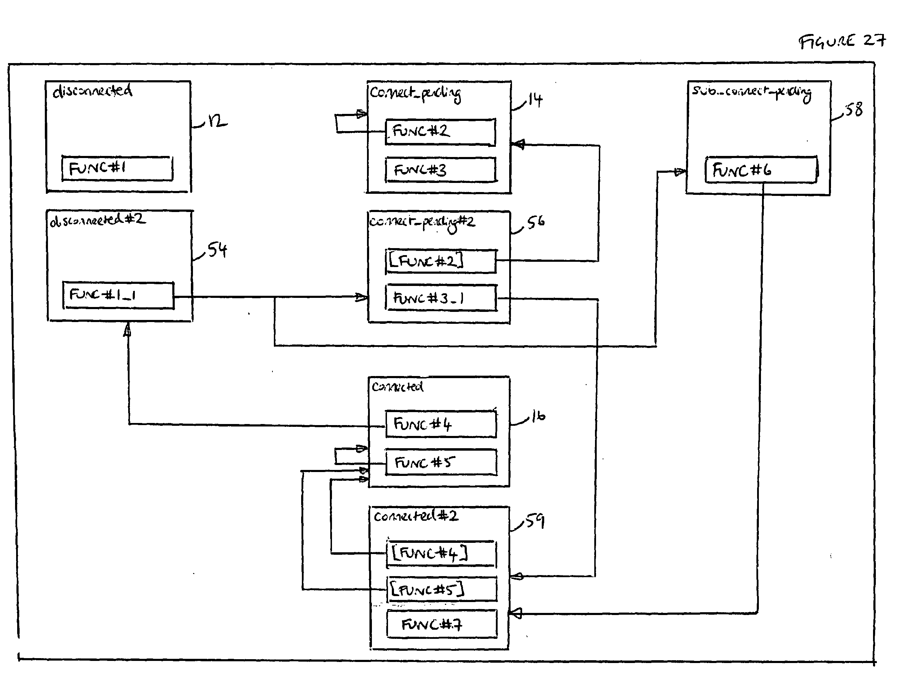

The newly introduced function pointers 60, 64, 66 and 69 comprise revised transitions to further states within the layer. Function FUNC#1_1 provides a state to transition from the updated state 54 disconnected#2, to upgraded state 56 when defining the connect_pending#2. The new function pointer FUNC#3_1 takes over the state transition, previously governed by FUNC#3 in the connect_pending state 14, to the connected state 16. Further, the new state subs connect_pending 58, has the function pointer FUNC#6, which provides a state transition also to the connected state 16, and FUNC#7 handles data_transfer messages and incorporates functionality that allows dynamic load sharing between the two network connections. These state transitions are illustrated in Figure 27.

The enhanced functionality provided in module 48 can be executed in a different execution environment (for example different JVM or operating system environment) from the original functionality by using the VOS concept of supporting generic function pointer tables (mapping object). Also, likewise, the programming language used in the enhancement module can be different from the original code.

The skilled person will recognise that the above-described apparatus and methods may be embodied as processor control code, for example on a carrier medium such as a disk, CD- or DVD-ROM, programmed memory such as read only memory (Firmware), or on a data carrier such as an optical or electrical signal carrier. For many applications embodiments of the invention will be implemented on a DSP (Digital Signal Processor), ASIC (Application Specific Integrated Circuit) or FPGA (Field Programmable Gate Array). Thus the code may comprise conventional programme code or microcode or, for example code for setting up or controlling an ASIC or FPGA. The code may also comprise code for dynamically configuring re-configurable apparatus such as reprogrammable logic gate arrays. Similarly the code may comprise code for a hardware description language such as Verilog or VHDL (Very high speed integrated circuit Hardware Description Language). As the skilled person will appreciate, the code may be distributed between a plurality of coupled components in communication with one another. Where appropriate, the embodiments may also be implemented using code running on a field-(re)programmable analogue array or similar device in order to configure analogue hardware.

The skilled person will also appreciate that the various embodiments and specific features described with respect to them could be freely combined with the other embodiments or their specifically described features in general accordance with the above teaching. The skilled person will also recognise that various alterations and modifications can be made to specific examples described without departing from the scope of the appended claims.

## Claims

1. A method of modifying a communications protocol for processing a signal provided in a processing apparatus (20) having a processor (22) and memory (36), the protocol defined by a plurality of protocol layers, at least one layer being, in use, capable of occupying one of a plurality of predetermined states wherein each state has associated with it a predetermined functionality including message dependent transition of the layer into one of the other states; the method comprising:
loading a software update module (46) into memory (36), the module (46) arranged to receive and process one or more messages corresponding to one of said states of one of said layers, the module (46) comprising at least one message dependent transition unit operable to cause transition of said layer into another state.

2. A method in accordance with claim 1, wherein the module is operable to intercept messages intended for the predetermined functionality implementing said corresponding state, and to pass on to said predetermined functionality messages unrelated to said message dependent transition unit.

3. A method in accordance with claim 1 or claim 2, wherein the update module is operable to receive and process a message and to cause transition of said layer into another state, said message being inoperable to cause transition in said layer prior to loading of said module.

4. A method in accordance with any preceding claim including arranging the update module to exchange protocol messages corresponding to said signal with other modules, the other modules arranged to process said signal according to a set of generic functions corresponding to other said layers.

5. A method in accordance with any preceding claim, further comprising loading said other software modules into the memory, the other modules comprising generic function pointers corresponding to said generic functions in a function mapping object; for each other module loading said function mapping object into the memory, the object comprising apparatus specific function pointers corresponding to the generic functions in order to map a said generic function to one or more apparatus specific functions; executing the other modules according to said mapped apparatus specific functions in order to process received signals according to said protocol layer.

6. A method in accordance with any preceding claim and further comprising loading a second software module (48) into the memory, the second module (48) arranged to receive and process said signal according to a set of generic functions corresponding to a second of said layers, the second module (48) comprising generic function pointers corresponding to said generic functions in a second function mapping object, loading said second function mapping object into the memory, the object comprising second apparatus specific function pointers corresponding to the generic functions in order to map a said generic function to one or more second apparatus specific functions, and executing the second module (48) according to said mapped second apparatus specific functions in order to process received signals according to said protocol layer; such that the first (46) and second (48) modules are executed in different execution or apparatus specific environments.

7. A method in accordance with any preceding claim wherein the update module is language independent.

8. A method in accordance with any preceding claim including providing high-level software language code for processing said signal according to said set of generic functions corresponding to a said layer; and compiling said code into said language independent software module.

9. A method in accordance with any preceding claim, including the step of removing from memory one or more of said predetermined functionalities corresponding with states of a layer other than the state which said layer presently occupies.

10. A program for controlling a processing apparatus (20) having instructions that when executed by the apparatus causes the apparatus to carry out the method of any preceding claim.

11. A storage medium bearing data which, when loaded into configurable apparatus, enables a program to be executed to cause the configurable apparatus to carry out the method of any of claims 1 to 9.

12. A signal bearing data which, when loaded into configurable apparatus, enables a program to be executed to cause the configurable apparatus to carry out the method of any of claims 1 to 9.

13. Apparatus for modifying a communications protocol for processing a signal provided in a processing apparatus (20) having a processor (22) and memory (36), the protocol defined by a plurality of protocol layers, at least one layer being, in use, capable of occupying one of a plurality of predetermined states wherein each state has associated with it a predetermined functionality including message dependent transition of the layer into one of the other states; the processing apparatus (20) comprising means for loading a software update module (46) into memory, the update module (46) being arranged to receive and process one or more messages corresponding to one of said states of one of said layers, the update module (46) comprising at least one message dependent transition unit operable to cause transition of said layer into another state.

14. Apparatus according to claim 13 wherein said update module is operable to function in a language independent manner from the predetermined functionality of the state to which it provides updated functionality.

15. Apparatus according to claim 13 or claim 14 wherein the update module is operable to configure apparatus to cause a layer loaded thereon to be capable of occupying at least one additional state, and is further operable to configure the apparatus to associate predetermined functionality with said at least one additional state including message dependent transition into and from said at least one additional state.

16. Apparatus according to any one of claims 13 to 15, further comprising memory management means operable to remove from memory one or more of said predetermined functionalities corresponding with states of a layer other than the state which said layer presently occupies.

17. Configurable apparatus configured as apparatus according to any one of claims 13 to 16.

18. An update module (46) for modifying a communications protocol in signal processing apparatus (20) having a processor (22) and memory (36), the protocol defined by a plurality of protocol layers, at least one layer being, in use, capable of occupying one of a plurality of predetermined states wherein each state has associated with it a predetermined functionality including message dependent transition of the layer into one of the other states; the update module (46) being loadable into memory (36) in said apparatus (20) to receive and process one or more messages corresponding to one of said states of one of said layers, the update module (46) comprising at least one message dependent transition unit operable to cause transition of said layer into another state.

19. The update module according to claim 18 wherein said update module is operable to function in a language independent manner from the predetermined functionality of the state to which it provides updated functionality.

20. The update module according to claim 18 or claim 19 wherein the update module is operable to configure apparatus to cause a layer loaded thereon to be capable of occupying at least one additional state, and is further operable to configure the apparatus to associate predetermined functionality with said at least one additional state including message dependent transition into and from said at least one additional state.

21. A storage medium storing processor readable instructions to cause an update module according to any one of claims 18 to 20 to be loaded into memory of processing apparatus including processor means and memory.

22. A signal bearing processor readable instructions to cause an update module according to any one of claims 18 to 20 to be loaded into the memory of and executed by a processing apparatus including processor means and memory.

## Patentansprüche

1. Verfahren zum Modifizieren eines Kommunikationsprotokolls zum Verarbeiten eines Signals, das in einer Verarbeitungsvorrichtung (20) mit einem Prozessor (22) und Speicher (36) bereitgestellt wird, wobei das Protokoll durch eine Vielzahl von Protokollschichten definiert wird, wobei mindestens eine Schicht in der Verwendung imstande ist, einen einer Vielzahl von vorbestimmten Zuständen einzunehmen, wobei mit jedem Zustand eine vorbestimmte Funktionalität einschließlich von nachrichtenabhängiger Umwandlung der Schicht in einen der anderen Zustände assoziiert ist; das Verfahren umfassend:
Laden eines Software-Aktualisierungsmoduls (46) in den Speicher (36), wobei das Modul (46) angeordnet ist, um eine oder mehr Nachrichten zu empfangen und zu verarbeiten, die mit einem der Zustände von einem der Schichten korrespondieren, wobei das Modul (46) mindestens eine nachrichtenabhängige Umwandlungseinheit umfasst, die betriebsfähig ist, um Umwandlung der Schicht in einen anderen Zustand zu bewirken.

2. Verfahren nach Anspruch 1, wobei das Modul betriebsfähig ist, um Nachrichten abzufangen, die für die vorbestimmte Funktionalität, die den korrespondierenden Zustand implementiert, intendiert sind, und um Nachrichten, die nicht zu der nachrichtenabhängigen Umwandlungseinheit in Beziehung stehen, zu der vorbestimmten Funktionalität weiterzuleiten.

3. Verfahren nach Anspruch 1 oder Anspruch 2, wobei das Aktualisierungsmodul betriebsfähig ist, um eine Nachricht zu empfangen und zu verarbeiten und um Umwandlung der Schicht in einen anderen Zustand zu bewirken, wobei die Nachricht nicht betriebsfähig ist, um vor dem Laden des Moduls Umwandlung in die Schicht zu bewirken.

4. Verfahren nach einem der vorstehenden Ansprüche, enthaltend, das Aktualisierungsmodul anzuordnen, um Protokollnachrichten, die mit dem Signal korrespondieren, mit anderen Modulen auszutauschen, wobei die anderen Module angeordnet sind, um das Signal gemäß eines Satzes allgemeiner Funktionen, die mit den anderen Schichten korrespondieren, zu verarbeiten.

5. Verfahren nach einem der vorstehenden Ansprüche, weiter umfassend Laden der anderen Software-Module in den Speicher, wobei die anderen Module allgemeine Funktionszeiger, die mit den allgemeinen Funktionen korrespondieren, in einem Funktionsabbildungsobjekt umfassen; für jedes andere Modul Laden des Funktionsabbildungsobjekts in den Speicher, wobei das Objekt vorrichtungsspezifische Funktionszeiger umfasst, die mit den allgemeinen Funktionen korrespondieren, um eine der allgemeinen Funktionen auf eine oder mehr vorrichtungsspezifische Funktionen abzubilden; Ausführen der anderen Module gemäß den abgebildeten vorrichtungsspezifischen Funktionen, um empfangene Signale gemäß der Protokollschicht zu verarbeiten.

6. Verfahren nach einem der vorstehenden Ansprüche und weiter umfassend Laden eines zweiten Software-Moduls (48) in den Speicher, wobei das zweite Modul (48) angeordnet ist, um das Signal gemäß eines Satzes von allgemeinen Funktionen, die mit einer zweiten der Schichten korrespondieren, zu empfangen und zu verarbeiten, das zweite Modul (48) umfassend allgemeine Funktionszeiger, die mit den allgemeinen Funktionen in einem zweiten Funktionsabbildungsobjekt korrespondieren, Laden des zweiten Funktionsabbildungsobjekts in den Speicher, wobei das Objekt zweite vorrichtungsspezifische Funktionszeiger umfasst, die mit den allgemeinen Funktionen korrespondieren, um eine der allgemeinen Funktionen auf eine oder mehr zweite vorrichtungsspezifische Funktionen abzubilden, und Ausrühren des zweiten Moduls (48) gemäß den abgebildeten zweiten vorrichtungsspezifischen Funktionen, um empfangene Signale gemäß der Protokollschicht zu verarbeiten; derart, dass die ersten (46) und zweiten (48) Module in verschiedenen ausführungs- oder vorrichtungsspezifischen Umgebungen ausgeführt werden.

7. Verfahren nach einem der vorstehenden Ansprüche, wobei das Aktualisierungsmodul sprachenunabhängig ist.

8. Verfahren nach einem der vorstehenden Ansprüche, enthaltend Bereitstellen von höherem Software-Sprachcode zum Verarbeiten des Signals gemäß des Satzes von allgemeinen Funktionen, die mit einer der Schichten korrespondieren; und Kompilieren des Codes in das sprachenunabhängige Software-Modul.

9. Verfahren nach einem der vorstehenden Ansprüche, enthaltend den Schritt des Entfernens einer oder mehr der vorbestimmten Funktionalitäten, die mit anderen Zuständen einer Schicht als dem Zustand, die die Schicht gegenwärtig einnimmt, korrespondieren, aus dem Speicher.

10. Programm zum Steuern einer Verarbeitungsvorrichtung (20), die über Anweisungen verfügt, die bei Ausführung durch die Vorrichtung bewirken, dass die Vorrichtung das Verfahren nach einem der vorstehenden Ansprüche ausführt.

11. Speichermedium, das Daten trägt, die, wenn sie in eine konfigurierbare Vorrichtung geladen werden, ermöglichen, dass ein Programm ausgeführt wird, um zu bewirken, dass die konfigurierbare Vorrichtung das Verfahren nach einem der Ansprüche 1 bis 9 ausführt.

12. Signal, das Daten trägt, die, wenn sie in eine konfigurierbare Vorrichtung geladen werden, ermöglichen, dass ein Programm ausgeführt wird, um zu bewirken, dass die konfigurierbare Vorrichtung das Verfahren nach einem der Ansprüche 1 bis 9 ausführt.

13. Vorrichtung zum Modifizieren eines Kommunikationsprotokolls zum Verarbeiten eines Signals, das in einer Verarbeitungsvorrichtung (20) mit einem Prozessor (22) und Speicher (36) bereitgestellt wird, wobei das Protokoll durch eine Vielzahl von Protokollschichten definiert wird, wobei mindestens eine Schicht in der Verwendung imstande ist, einen einer Vielzahl von vorbestimmten Zuständen einzunehmen, wobei mit jedem Zustand eine vorbestimmte Funktionalität einschließlich von nachrichtenabhängiger Umwandlung der Schicht in eine der anderen Zustände assoziiert ist; die Verarbeitungsvorrichtung (20) umfassend Mittel zum Laden eines Software-Aktualisierungsmoduls (46) in den Speicher, wobei das Modul (46) angeordnet ist, um eine oder mehr Nachrichten zu empfangen und zu verarbeiten, die mit einem der Zustände von einem der Schichten korrespondieren, wobei das Aktualisierungsmodul (46) mindestens eine nachrichtenabhängige Umwandlungseinheit umfasst, die betriebsfähig ist, um Umwandlung der Schicht in einen anderen Zustand zu bewirken.

14. Vorrichtung nach Anspruch 13, wobei das Aktualisierungsmodul betriebsfähig ist, um in einer sprachenunabhängigen Weise von der vorbestimmten Funktionalität des Zustands, zu dem es aktualisierte Funktionalität bereitstellt, zu funktionieren.

15. Vorrichtung nach Anspruch 13 oder Anspruch 14, wobei das Aktualisierungsmodul betriebsfähig ist, um die Vorrichtung zu konfigurieren, um zu bewirken, dass eine Schicht, die darin geladen ist, imstande ist, mindestens einen zusätzlichen Zustand einzunehmen, und weiter betriebsfähig ist, um die Vorrichtung zu konfigurieren, um vorbestimmte Funktionalität mit dem mindestens einen zusätzlichen Zustand einschließlich von nachrichtenabhängiger Umwandlung in den und aus dem mindestens einen zusätzlichen Zustand zu assoziieren.

16. Vorrichtung nach einem der Ansprüche 13 bis 15, weiter umfassend Mittel zur Speicherverwaltung, das betriebsfähig ist, um eine oder mehr der vorbestimmten Funktionalitäten, die mit anderen Zuständen einer Schicht als dem Zustand, die die Schicht gegenwärtig einnimmt, korrespondieren, aus dem Speicher zu entfernen.

17. Konfigurierbare Vorrichtung, die als Vorrichtung nach einem der Ansprüche 13 bis 16 konfiguriert ist.

18. Aktualisierungsmodul (46) zum Modifizieren eines Kommunikationsprotokolls in einer Signalverarbeitungsvorrichtung (20) mit einem Prozessor (22) und Speicher (36), wobei das Protokoll durch eine Vielzahl von Protokollschichten definiert wird, wobei mindestens eine Schicht in der Verwendung imstande ist, einen einer Vielzahl von vorbestimmten Zuständen einzunehmen, wobei mit jedem Zustand eine vorbestimmte Funktionalität einschließlich von nachrichtenabhängiger Umwandlung der Schicht in eine der anderen Zustände assoziiert ist; das Aktualisierungsmodul (46) in den Speicher (36) in der Vorrichtung (20) ladbar ist, um eine oder mehr Nachrichten zu empfangen und zu verarbeiten, die mit einem der Zustände von einem der Schichten korrespondieren, wobei das Aktualisierungsmodul (46) mindestens eine nachrichtenabhängige Umwandlungseinheit umfasst, die betriebsfähig ist, um Umwandlung der Schicht in einen anderen Zustand zu bewirken.

19. Aktualisierungsmodul nach Anspruch 18, wobei das Aktualisierungsmodul betriebsfähig ist, um in einer sprachenunabhängigen Weise von der vorbestimmten Funktionalität des Zustands, zu dem es aktualisierte Funktionalität bereitstellt, zu funktionieren.

20. Aktualisierungsmodul nach Anspruch 18 oder Anspruch 19, wobei das Aktualisierungsmodul betriebsfähig ist, um die Vorrichtung zu konfigurieren, um zu bewirken, dass eine Schicht, die darin geladen ist, imstande ist, mindestens einen zusätzlichen Zustand einzunehmen, und weiter betriebsfähig ist, um die Vorrichtung zu konfigurieren, um vorbestimmte Funktionalität mit dem mindestens einen zusätzlichen Zustand einschließlich von nachrichtenabhängiger Umwandlung in den und aus dem mindestens einen zusätzlichen Zustand zu assoziieren.

21. Speichermedium, das prozessorlesbare Anweisungen speichert, um zu bewirken, dass ein Aktualisierungsmodul nach einem der Ansprüche 18 bis 20 in den Speicher der Verarbeitungsvorrichtung einschließlich von Prozessormittel und Speicher geladen wird.

22. Signal, das prozessorlesbare Anweisungen trägt, um zu bewirken, dass ein Aktualisierungsmodul nach einem der Ansprüche 18 bis 20 in den Speicher einer Verarbeitungsvorrichtung einschließlich von Prozessormittel und Speicher geladen und davon ausgeführt wird.

## Revendications

1. Procédé de modification d'un protocole de communication pour traiter un signal prévu dans un dispositif de traitement (20) comportant un processeur (22) et une mémoire (36), le protocole étant défini par une pluralité de couches de protocole, au moins une couche étant, en utilisation, capable d'occuper l'un d'une pluralité d'états prédéterminés, dans lequel, à chaque état, est associé une fonctionnalité prédéterminée comprenant une transition en fonction d'un message de la couche dans l'un des autres états ; le procédé comprenant les étapes consistant à :
charger un module de mise à jour logicielle (46) dans la mémoire (36), le module (46) étant agencé pour recevoir et traiter un ou plusieurs messages correspondant à l'un desdits états de l'une desdites couches, le module (46) comprenant au moins une unité de transition en fonction d'un message pouvant être mise en oeuvre pour provoquer la transition de ladite couche dans un autre état.

2. Procédé selon la revendication 1, dans lequel le module peut être mis en oeuvre pour intercepter des messages destinés à la fonctionnalité prédéterminée mettant en oeuvre ledit état correspondant, et pour transmettre lesdits messages de la fonctionnalité prédéterminée ne concernant pas ladite unité de transition en fonction d'un message.

3. Procédé selon la revendication 1 ou la revendication 2, dans lequel le module de mise à jour peut être mis en oeuvre pour recevoir et traiter un message et pour provoquer la transition de ladite couche dans un autre état, ledit message ne pouvant pas servir à provoquer la transition dans ladite couche avant le chargement dudit module.

4. Procédé selon l'une quelconque des revendications précédentes, comprenant l'agencement du module de mise à jour pour échanger des messages de protocole correspondant audit signal avec d'autres modules, les autres modules étant agencés pour traiter ledit signal selon un ensemble de fonctions génériques correspondant aux autres dites couches.

5. Procédé selon l'une quelconque des revendications précédentes, comprenant en outre le chargement desdits autres modules logiciels dans la mémoire, les autres modules comprenant des pointeurs de fonction générique correspondant auxdites fonctions génériques dans un objet de mappage de fonction ;
pour chaque autre module, le chargement dudit objet de mappage de fonction dans la mémoire, l'objet comprenant des pointeurs de fonction spécifiques à un dispositif correspondant aux fonctions génériques afin de mapper une dite fonction générique vers une ou plusieurs fonctions spécifiques à un dispositif ;
l'exécution des autres modules selon lesdites fonctions spécifiques à un dispositif mappées afin de traiter des signaux reçus selon ladite couche de protocole.

6. Procédé selon l'une quelconque des revendications précédentes et comprenant en outre le chargement d'un deuxième module logiciel (48) dans la mémoire, le deuxième module (48) étant agencé pour recevoir et traiter ledit signal selon un ensemble de fonctions génériques correspondant à une deuxième desdites couches, le deuxième module (48) comprenant des pointeurs de fonction générique correspondant auxdites fonctions génériques dans un deuxième objet de mappage de fonction, le chargement dudit deuxième objet de mappage de fonction dans la mémoire, l'objet comprenant des deuxièmes pointeurs de fonction spécifique à un dispositif correspondant aux fonctions génériques afin de mapper une dite fonction générique vers une ou plusieurs deuxièmes fonctions spécifiques à un dispositif, et l'exécution du deuxième module (48) selon lesdites deuxièmes fonctions spécifiques à un dispositif mappées afin de traiter des signaux reçus selon ladite couche de protocole ; de sorte que les premier (46) et deuxième (48) modules soient exécutés dans différents environnements d'exécution ou spécifiques à un dispositif.

7. Procédé selon l'une quelconque des revendications précédentes, dans lequel le module de mise à jour est indépendant du langage.

8. Procédé selon l'une quelconque des revendications précédentes, comprenant la fourniture d'un code de langage logiciel de niveau élevé pour traiter ledit signal selon ledit ensemble de fonctions génériques correspondant à une dite couche ; et la compilation dudit code en ledit module logiciel indépendant du langage.

9. Procédé selon l'une quelconque des revendications précédentes, comprenant l'étape de retrait de la mémoire d'une ou de plusieurs desdites fonctionnalités prédéterminées correspondant à des états d'une couche autre que l'état actuellement occupé par ladite couche.

10. Programme pour commander un dispositif de traitement (20) comportant des instructions qui, lorsqu'elles sont exécutées par le dispositif, amènent le dispositif à exécuter le procédé selon l'une quelconque des revendications précédentes.

11. Support de mémorisation supportant des données qui, lorsqu'elles sont chargées dans un dispositif configurable, permettent à un programme d'être exécuté pour amener le dispositif configurable à exécuter le procédé selon l'une quelconque des revendications 1 à 9.

12. Signal transportant des données qui, lorsqu'elles sont chargées dans un dispositif configurable, permettent à un programme d'être exécuté pour amener le dispositif configurable à exécuter le procédé selon l'une quelconque des revendications 1 à 9.

13. Dispositif pour modifier un protocole de communication pour traiter un signal prévu dans un dispositif de traitement (20) comportant un processeur (22) et une mémoire (36), le protocole étant défini par une pluralité de couches de protocole, au moins une couche étant, en utilisation, capable d'occuper l'un d'une pluralité d'états prédéterminés, dans lequel, à chaque état, est associé une fonctionnalité prédéterminée comprenant une transition en fonction d'un message de la couche dans l'un des autres états ; le dispositif de traitement (20) comprenant des moyens pour charger un module de mise à jour logicielle (46) dans la mémoire (36), le module de mise à jour (46) étant agencé pour recevoir et traiter un ou plusieurs messages correspondant à l'un desdits états de l'une desdites couches, le module de mise à jour (46) comprenant au moins une unité de transition en fonction d'un message pouvant être mise en oeuvre pour provoquer la transition de ladite couche dans un autre état.

14. Dispositif selon la revendication 13, dans lequel ledit module peut être mis en oeuvre pour fonctionner d'une manière indépendante du langage par rapport à la fonctionnalité prédéterminée de l'état auquel il fournit la fonctionnalité mise à jour.

15. Dispositif selon la revendication 13 ou la revendication 14, dans lequel le module de mise à jour peut être mis en oeuvre pour configurer le dispositif pour amener une couche chargée sur celui-ci à être capable d'occuper au moins un état supplémentaire, et peut en outre être mis en oeuvre pour configurer le dispositif pour associer une fonctionnalité prédéterminée audit au moins un état supplémentaire comprenant une transition en fonction d'un message dans et à partir dudit au moins un état supplémentaire.

16. Dispositif selon l'une quelconque des revendications 13 à 15, comprenant en outre des moyens de gestion de mémoire pouvant être mis en oeuvre pour retirer de la mémoire une ou plusieurs desdites fonctionnalités prédéterminées correspondant aux états d'une couche autres que l'état actuellement occupé par ladite couche.

17. Dispositif configurable configuré en tant que dispositif selon l'une quelconque des revendications 13 à 16.

18. Module de mise à jour (46) pour modifier un protocole de communication dans un dispositif de traitement de signal (20) comportant un processeur (22) et une mémoire (36), le protocole étant défini par une pluralité de couches de protocole, au moins une couche étant, en utilisation, capable d'occuper l'un d'une pluralité d'états prédéterminés, dans lequel, à chaque état, est associé une fonctionnalité prédéterminée comprenant une transition en fonction d'un message de la couche dans l'un des autres états ; le module de mise à jour (46) pouvant être chargé dans la mémoire (36) dans ledit dispositif (20) pour recevoir et traiter un ou plusieurs messages correspondant à l'un desdits états de l'une desdites couches, le module de mise à jour (46) comprenant au moins une unité de transition en fonction d'un message pouvant être mise en oeuvre pour provoquer la transition de ladite couche dans un autre état.

19. Module de mise à jour selon la revendication 18, dans lequel ledit module de mise à jour peut être mis en oeuvre pour fonctionner d'une manière indépendante du langage par rapport à la fonctionnalité prédéterminée de l'état auquel il fournit la fonctionnalité mise à jour.

20. Module de mise à jour selon la revendication 18 ou la revendication 19, dans lequel le module de mise à jour peut être mis en oeuvre pour configurer le dispositif pour amener une couche chargée sur celui-ci à être capable d'occuper au moins un état supplémentaire, et peut en outre être mis en oeuvre pour configurer le dispositif pour associer une fonctionnalité prédéterminée audit au moins un état supplémentaire comprenant une transition en fonction d'un message dans et à partir dudit au moins un état supplémentaire.

21. Support de mémorisation mémorisant des instructions pouvant être lues par un processeur pour amener un module de mise à jour selon l'une quelconque des revendications 18 à 20 à être chargé dans la mémoire d'un dispositif de traitement comprenant des moyens formant processeur et une mémoire.

22. Signal transportant des instructions pouvant être lues par un processeur pour amener un module de mise à jour selon l'une quelconque des revendications 18 à 20 à être chargé dans la mémoire d'un dispositif de traitement comprenant des moyens formant processeur et une mémoire et exécuté par celui-ci.
